# EUROPEAN PATENT APPLICATION

(11) **EP 4 357 424 A1**
(43) Date of publication of application: **24.04.2024**
(21) Application number: 22202643.7
(22) Date of filing: 20.10.2022
(51) Int. Cl.: C09D 11/107, C09D 11/324, C09D 11/326, C09D 11/38, B41M 5/00

(54) **INDUSTRIAL INKJET PRINTING METHODS**

(71) Applicant: AGFA NV, 2640 Mortsel (BE)
(72) Inventor: LENAERTS, Jens, 2640 Mortsel (BE); LOCCUFIER, Johan, 2640 Mortsel (BE)
(74) Representative: Strijckers, Hans Louis P.

(57) **Abstract**

An industrial inkjet printing method comprising the steps of: a) jetting an aqueous inkjet ink from a silicon-based MEMS piezoelectric inkjet print head on a substrate at a jetting temperature between 20°C and 40°C; and b) drying the aqueous inkjet ink jetted on the substrate; wherein the aqueous inkjet ink contains a carbon black pigment and a polymer attached to the colour pigment with a weight ratio P/CB of the polymer (P) to the carbon black pigment (CB) in the range of 0.50 to 0.90; and wherein the pH of the aqueous inkjet ink is between 7.5 and 9.5.

## Description

### Technical Field

This invention relates to industrial inkjet printing methods using aqueous inkjet inks developed primarily to improve print head lifetime of silicon-based MEMS inkjet print heads.

### Background Art

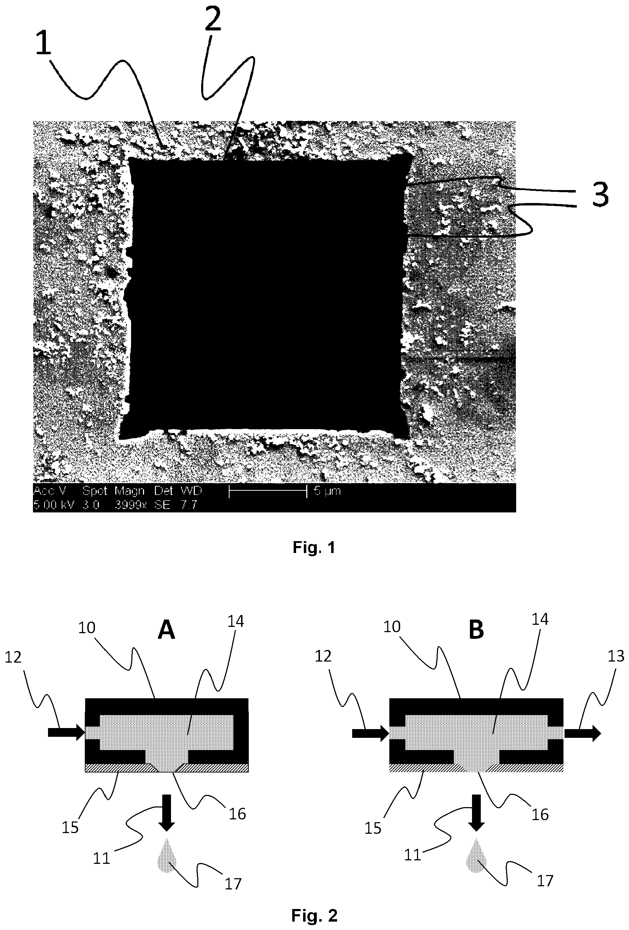

Economies of scale, ready availability of cheap high-quality materials and ability to incorporate electronic functionality have made silicon-based materials attractive for the construction of microelectromechanical systems (MEMS) devices, such as silicon-based MEMS inkjet print heads. However, it has been observed that aqueous chemical inkjet inks can cause corrosion by etching the silicon-based materials (see Figure 1) leading to a clear deterioration of the jetting performance of the print head. This corrosion may cause deterioration in the accuracy of the discharge and landing of the ink droplets and is thus detrimental to printing reliability, the latter being an essential requirement in an industrial inkjet environment along with cost-efficiency.

One approach is to protect the MEMS and circuitry included in a silicon-based MEMS inkjet print head from being exposed to the corrosive properties of an aqueous inkjet ink passing there through and being ejected therefrom by applying a sealing film to the MEMS and circuitry. For example, EP 3962793 A (HP) discloses an undoped dielectric film as sealing film, while EP 1465773 A (XAAR TECHNOLOGY LTD) discloses the deposition of a parylene film to provide resistance to corrosion. However, such deposition of a thin film in a reproducible manner reduces the advantage of silicon-based materials in providing low-cost print heads.

Another approach is to adapt the aqueous inkjet ink so that the ink becomes less corrosive. WO 2010/138191 A (EASTMAN KODAK CO) discloses an aqueous ink composition with an inkjet printer comprising a soluble organic aromatic azo compound in a concentration sufficient to inhibit corrosion of the silicon-based material when contacted by the ink composition. However, it has been observed that in prints made with aqueous inkjet inks for décor paper printing that the addition of these aromatic azo dyes give rise to image bleed during the impregnation process that takes place after printing. The dyes leach in the impregnation bath and give rise to colour contamination in the process.

Another approach, as disclosed by US 2008129811 A (SONY CORP), uses dispersions of alumina or cerium oxide particles that have a positive charge in the pH range from 4 to 6. These positively charged particles are believed to adhere to the negatively charged silicon-based surfaces in the print head and thereby prevent corrosion of these surfaces by the ink. These methods are limited to specific ink compositions and do not work well with pigment-based inks where a negative charge on the pigment surface and polymers is critical to the stability of the pigmented inkjet ink. The latter pigmented inkjet inks require an alkaline pH larger than 7.

In still another approach, US 2012105553 A (EASTMAN KODAK CO) discloses the use of a specific soluble metal ligand complex in an aqueous inkjet ink to inhibit corrosion of the silicon-based material of a print head. However, pigmented aqueous inks usually contain organic polymer binders or dispersants that are typically solubilized at weakly alkaline pH levels by deprotonation of carboxylic acid groups. The resultant carboxylate ions may form complexes with the multivalent metal ions of the soluble metal ligand complex, wherein the polymers may further crosslink and become insoluble, thus leading to unreliable inkjet printing.

A need exists for cost-efficient industrial inkjet printing methods having improved corrosion resistance of silicon-based MEMS inkjet print heads and good printing reliability when using pigmented aqueous ink jet inks.

### Summary of invention

In order to overcome the problems described above, preferred embodiments of the present invention have been realised with industrial inkjet printing method comprising the steps of: a) jetting an aqueous inkjet ink from a silicon-based MEMS piezoelectric inkjet print head on a substrate at a jetting temperature between 20°C and 35°C; and b) drying the aqueous inkjet ink jetted on the substrate; wherein the aqueous inkjet ink contains a carbon black pigment and a polymer attached to the carbon black pigment with a weight ratio P/CB of the polymer (P) to the carbon black pigment (CB) in the range of 0.50 to 0.90; and wherein the pH of the aqueous inkjet ink is between 7.5 and 9.5.

A first aspect of the invention is that an improved corrosion resistance in silicon-based MEMS piezoelectric inkjet print heads was obtained by controlling the pH and the weight ratio P/CB of an aqueous inkjet ink containing a carbon black pigment and a polymer attached to the carbon black pigment with a weight ratio P/CB of the polymer (P) to the carbon black pigment (CB).

A second aspect of the invention is that specific compounds were found that are capable for functioning as an anti-corrosion compound in a silicon-based MEMS inkjet print head.

The first and second aspects of the invention may also be used in combination. It was observed that without one or both of the above measures that the acoustic period of Samba^{®} G3L print head clearly increased when printing with an inkjet ink containing a carbon black pigment. A print head with larger acoustic period shows a higher drop volume. Also the frequency sweep showed more unstable regions for print heads with larger acoustic periods.

The main object of the invention is to provide industrial inkjet printing methods having high printing reliability and cost-efficiency.

Further advantages and embodiments of the present invention will become apparent from the following description.

### Brief description of drawings

**Figure 1** shows a microscopic photograph (3999x magnification) of a nozzle 2 in a nozzle plate 1 that has experienced corrosion at the nozzle edges 3.
**Figure 2****.A** shows a cross-section of an end shooter print head, where the print head walls (10) encompass an ink channel (14) supplied with inkjet ink via an ink inlet (12), which can only leave the print head as an ejected ink droplet (17) via ink ejection (11) through a nozzle (16) in the nozzle plate (15) of the print head. The piezo element of the print head for forming the ejected droplet (17) is not shown in the schematic drawing.
**Figure 2****.B** shows a cross-section of a through flow print head, where the print head walls (10) encompass an ink channel (14) supplied with inkjet ink via an ink inlet (12) and which continuously leaves the ink channel (14) via an ink outlet (13) and only when required leaves the ink channel (14) as an ejected ink droplet (17) via ink ejection (11) through a nozzle (16) in the nozzle plate (15) of the print head. The piezo element of the print head for forming the ejected droplet (17) is not shown in the schematic drawing.

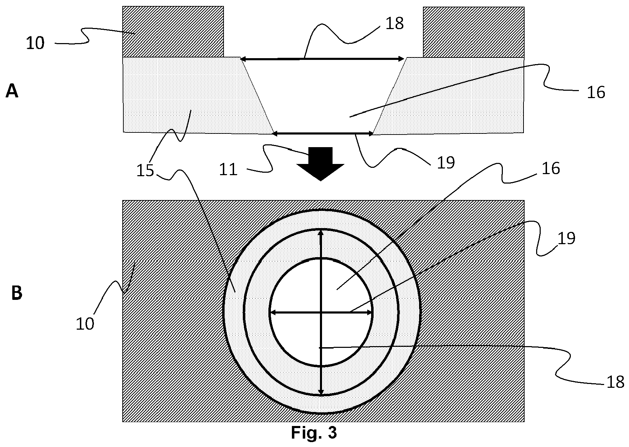

**Figure 3****.A** shows a cross-section of the area around a nozzle (16) in a nozzle plate (15) attached to print head wall (10), wherein the nozzle (16) has an outer nozzle diameter (19), through which the ink ejection (11) takes place, and a larger inner nozzle diameter (18).
**Figure 3****.B** shows a top view taken from the inside of a print head and showing the area around a nozzle (16) in a nozzle plate (15) attached to print head wall (10) with the nozzle (16) having an outer nozzle diameter (19) that is smaller than the inner nozzle diameter (18).

### Description of embodiments

### Definitions

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group.

The term "unsubstituted", in e.g. unsubstituted alkyl group means that the alkyl group contains only the atoms normally present in such a group, i.e. carbon and hydrogen.

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, an ester group, an amide group, an ether group, a thioether group, a ketone group, an aldehyde group , a sulfoxide group, a sulfone group, a sulfonate ester group, a sulphonamide group, -CI, -Br, -I, - OH, -SH, -CN and -NO₂.

### Industrial Inkjet Printing Methods

An industrial inkjet printing method according to a preferred embodiment of the present invention is an industrial inkjet printing method comprising the steps of: a) jetting an aqueous inkjet ink from a silicon-based MEMS piezoelectric inkjet print head on a substrate at a jetting temperature between 20°C and 40°C; and b) drying the aqueous inkjet ink jetted on the substrate; wherein the aqueous inkjet ink contains a carbon black pigment and a polymer attached to the carbon black pigment with a weight ratio P/CB of the polymer (P) to the carbon black pigment (CB) in the range of 0.50 to 0.90; and wherein the pH of the aqueous inkjet ink is between 7.5 and 9.5, more preferably in the range of 8.0 to 9.0.

An industrial inkjet printing method is an inkjet printing method using a large inkjet device having often a print width of more than half a meter or usually even 1 meter or more. It can be clearly differentiated from home/office inkjet printers that are usually table top devices.

The industrial inkjet printing is preferably performed by a single pass printing process, which is very cost-efficient but demands a very high printing reliability as a single failing nozzle may cause a line defect in the printed image.

The aqueous inkjet inks are preferably jetted at a jetting temperature of in the range of 20°C to 40°C, preferably 25°C to 38°C and most preferably not more than 35°C. This ensures a good printing reliability. Using higher temperatures, e.g. 45°C accelerates water evaporation at the nozzle, causing latency problems.

The aqueous inkjet ink has a pH between 7.5 and 9.5. Below a pH of 7.5, the dispersion stability worsens and the anti-corrosion compounds lose effectiveness. Above a pH of 9.5, the corrosion process of silicon is observed to be accelerated. Even better results for dispersion stability and reduction of corrosion are obtained when the pH is in the range of 8.0 to 9.0.

In a preferred embodiment of the industrial inkjet printing method, the polymer is either a polymeric dispersant or otherwise a polymer forming the polymeric shell of a microcapsule encapsulating the carbon black pigment. More preferably, the polymer is cross-linked.

The silicon-based MEMS piezoelectric inkjet print head is preferably a through flow piezoelectric print head having a nozzle surface area NS smaller than 500 µm². The term "through flow" means that there is a constant recirculation of ink through the print head that reduces the possibility of sedimentation of pigment particles inside the print head, which otherwise would lead to clogged nozzles and unreliable inkjet printing.

A preferred piezoelectric print head has nozzles with a nozzle surface area NS smaller than 500 µm², because this allows for good image quality in industrial inkjet printed substrates. However, the image quality is more rapidly affected by corrosion when using such a small nozzle surface area for the nozzles. For example, even minor corrosion of the nozzle surface aperture may already cause large variations in ink droplet sizes.

In a preferred embodiment of the industrial inkjet printing method, the viscosity of the aqueous inkjet ink is between 3.0 and 6.5 mPa.s at a temperature of 32°C. Such a viscosity allows for excellent printing reliability when using silicon-based MEMS piezoelectric inkjet print head having a nozzle surface area NS smaller than 500 µm².

In a preferred embodiment of the industrial inkjet printing method, the average particle size is between 80 and 150 nm as measured by dynamic light scattering. Corrosion may increase rapidly below 80 nm because of the larger specific surface of the carbon black pigment, because the carbon black surface is believed to catalyse the corrosion. The printing reliability decreases above 150 nm for reasons of dispersion stability, especially for a piezoelectric inkjet print head having a nozzle surface area NS smaller than 500 µm².

The industrial inkjet printing method preferably uses an aqueous inkjet ink containing the carbon black pigment in an amount of 1.8 to 5.0 wt%, preferably 2.0 to 4.0 wt% based on the total weight of the aqueous inkjet ink. Below 1.8 wt% insufficient optical density is generally produced, while above 5.0 wt% the printing reliability decreases due to a higher viscosity of the inkjet ink. By decreasing the carbon black pigment concentration from 5.0 wt% to 4.0 wt%, the industrial inkjet printing method becomes more cost-efficient.

In a preferred embodiment of the industrial inkjet printing method, the first aspect of the invention relating to the pH and the weight ratio P/CB is combined with the second aspect of the invention including a specific anti-corrosion compound in the aqueous inkjet ink. The anti-corrosion compound is selected from a compound including a six-membered aromatic ring having two hydroxyl groups in para-position and a compound according to Formula 2, 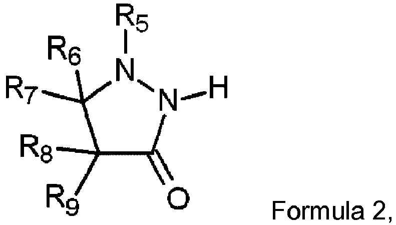 wherein R5 is selected from the group consisting of an alkyl group, an alkenyl group, an alkynyl group, an aralkyl group, an alkaryl group and an aryl and a heteroaryl group; R6 to R9 are independently selected from the group consisting of a hydrogen, an alkyl group, an alkenyl group, an alkynyl group, an aralkyl group, an alkaryl group and an aryl group and a heteroaryl group; or any of R6 to R9 may represent the necessary atoms to form a five to eight membered ring.

### Piezoelectric Print heads

Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head.

In a preferred embodiment, the piezoelectric print head is a through-flow type of piezoelectric print head having a maximum nozzle surface area of 500 µm².

The difference between piezoelectric through-flow print heads and other piezoelectric print heads is shown by Figure 2. In an end shooter print head, like the one shown in Figure 2.A and often also called a single ended print head, the ink flows via an ink inlet (12) of the print head into the ink channel (14) and can only exit through a nozzle (16). In a through flow print head, like the one shown in Figure 2.B and often also called a recirculating print head, the ink flows continuously via an ink inlet (12) through the ink channel (14) and exits the nozzle (16) only when required, otherwise the ink continuously exits the ink channel via an ink outlet (13) of the print head.

Commercial examples of end shooter print heads are, for example, the piezoelectric print heads Gen5 and Gen5S from RICOH and KJ4B from KYOCERA. Suitable piezoelectric through-flow print heads are the print heads Samba G3L and G5L from FUJIFILM DIMATIX and the 5601 print head from XAAR.

The nozzle in a nozzle plate usually has an outer nozzle aperture which is smaller than the inner nozzle aperture. The inner nozzle aperture is the aperture facing the ink channel, while the outer nozzle aperture faces the outside environment of the print head. The shape of the nozzle aperture is usually circular, oval, square or rectangular, but may have other more complex shapes.

The nozzle surface area NS is calculated based on the dimensions of the outer nozzle using well-known mathematical formulas for surface areas. For example, in case of a circular nozzle, the nozzle surface area NS is calculated by the formula: NS = π × r², wherein the radius r is half of the outer nozzle diameter (19) in Figure 3.

The nozzle surface area NS is preferably between 100 and 350 µm2, more preferably between 150 and 300 µm² and most preferably between 200 and 250 µm². In these ranges, the print heads can produce images of excellent image quality.

The native drop size is the drop volume of a single droplet in normal print conditions, this means standard waveforms and reference voltage. In the present invention, the native drop size of the piezoelectric through-flow print heads is preferably between 2.0 and 5.5 pL, more preferably between 2.2 and 5.0 pL. In these small native drop size ranges, it is possible to somewhat mask line artefacts caused by failing nozzles, thus leading to larger productivity.

### Polymer on Carbon Black

In the present invention, a polymer is attached to the carbon black pigment with a weight ratio P/CB of the polymer (P) to the carbon black pigment (CB) being in the range of 0.50 to 0.90.

The polymer attached to the carbon black pigment is either a polymeric dispersant or otherwise a polymer forming the polymeric shell of a microcapsule encapsulating the carbon black pigment. The polymer attached to the carbon black pigment may be cross-linked to enhance printing reliability further.

A polymeric dispersant has usually at least one pigmentophilic part and one part that has more affinity for the aqueous dispersion medium. The pigmentophilic part of the dispersant usually includes cationic groups that can interact with the negative groups, such as carboxylic acid groups, that are often present as anchor sites on the pigment surface. These groups are mostly in dissociated form at the pH of the aqueous inkjet ink in the present invention. Alternatively, also hydrogen bonding can be used for anchoring the dispersant of the pigment surface. The pigment surface is often hydrophobic and a hydrophobic part of the polymeric dispersant can interact with the pigment surface, while a hydrophilic part of the polymeric dispersant has more affinity for the aqueous dispersion medium.

The polymeric dispersant is usually added to the pigment during the preparation of a concentrated dispersion. For efficient milling often a smaller amount of polymeric dispersant is added during the pigment dispersion and a residual amount of polymeric dispersant is added afterwards during the preparation of the inkjet ink. The latter polymeric dispersant may be the same or a different polymeric dispersant than the one used during the preparation of the concentrated pigment dispersion. The pigmentophilic part of the dispersant assures immediate attachment to an anchor site on the pigment surface, when the residual amount of polymeric dispersant is added during the preparation of the inkjet ink.

Another way of dispersing the pigment is by encapsulating the pigment into a macrocapsule. The polymer attached to the carbon black pigment is then the polymer forming the polymeric shell of a microcapsule, while the core of the microcapsule then contains the pigment. Different technologies can be used to make the microcapsules and are well-known in the art.

### Polymeric Dispersants

It is preferable that the polymeric dispersant has at least one hydrophilic structural unit and at least one hydrophobic structural unit.

A hydrophilic structural unit is a structural unit containing at least one hydrophilic group. Examples of the hydrophilic group include a nonionic group, a carboxy group, a sulfonic acid group, and a phosphoric acid group. Examples of the nonionic group include a hydroxyl group, an amide group (having an unsubstituted nitrogen atom), a group derived from an alkylene oxide polymer (for example, polyethylene oxide or polypropylene oxide), and a group derived from a sugar alcohol. The content ratio of the hydrophilic structural unit and the hydrophobic structural unit is preferably in the range of (hydrophilic moiety:hydrophobic moiety) = 15:85 to 40:60, and most preferably in the range of (hydrophilic moiety:hydrophobic moiety) = 15:85 to 30:70.

The hydrophilic structural unit is preferably an acidic group, and a structural unit having a carboxy group is more preferred.

Examples of the structural unit having a carboxy group include structural units derived from (meth)acrylic acid, β-carboxyethyl acrylate, fumaric acid, itaconic acid, maleic acid, and crotonic acid. Among these structural units having a carboxy group, structural units derived from (meth)acrylic acid and β-carboxyethyl acrylate are preferred, and structural units derived from (meth)acrylic acid are more preferred.

Examples of the hydrophobic structural unit include structural units derived from (meth)acrylic acid esters, and structural units derived from aromatic group-containing monomers.

Among these hydrophobic structural units, a structural unit derived from at least one selected from C1-C20 alkyl (meth)acrylate, benzyl (meth)acrylate, phenoxyethyl (meth)acrylate, and derivatives thereof is preferred.

These hydrophobic structural units may be included singly or in combination of two or more kinds thereof in the polymeric dispersant.

The polymeric dispersant is preferably a dispersant having a hydrophilic structural unit having a carboxy group, from the viewpoint of dispersibility, and the acid value is preferably 90 mg KOH/g to 200 mg KOH/g, and more preferably 100 mg KOH/g to 180 mg KOH/g. The acid value is measured by the method described in JIS Standards (JIS K0070, 1992).

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable commercial dispersants are DISPERBYK^{™} dispersants available from BYK CHEMIE, JONCRYL^{™} dispersants available from BASF and SOLSPERSE^{™} dispersants available from LUBRIZOL.

Suitable commercially-available polymeric dispersants include DISPERBYK^{™} 2015 (manufactured by BYK CHEMIE); Joncryl^{™} 67, Joncryl^{™} 678, Joncryl^{™} 586, Joncryl^{™} 611, Joncryl^{™} 680, Joncryl^{™} 682, Joncryl^{™} 683, and Joncryl^{™} 690 (manufactured by BASF); Solsperse^{™} 32000, Solsperse^{™} 35000 and Solsperse^{™} 39000 (manufactured by LUBRIZOL)

A detailed list of polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000, in order to obtain good jetting performance and printing reliability.

The weight-average molecular weight of the polymeric dispersant is preferably 1,000 to 100,000, more preferably 3,000 to 50,000, and even more preferably 5,000 to 40,000 as measured by gel permeation chromatography (GPC).

In a preferred embodiment, the polymeric dispersant used is a copolymer comprising between 3 and 11 mol% of a long aliphatic chain (meth)acrylate wherein the long aliphatic chain contains at least 10 carbon atoms. The long aliphatic chain (meth)acrylate contains preferably 10 to 18 carbon atoms. The long aliphatic chain (meth)acrylate is preferably decyl (meth)acrylate. The polymeric dispersant can be prepared with a simple controlled polymerization of a mixture of monomers and/or oligomers including between 3 and 11 mol% of a long aliphatic chain (meth)acrylate wherein the long aliphatic chain contains at least 10 carbon atoms. A commercially available polymeric dispersant being a copolymer comprising between 3 and 11 mol% of a long aliphatic chain (meth)acrylate is Edaplan^{™} 482, a polymeric dispersant from MUNZING.

### Encapsulated Carbon Black Pigments

In the present invention, the polymer attached to the carbon black pigment may also be a polymer forming the polymeric shell of a microcapsule encapsulating the carbon black pigment in its core. A single polymer or a mixture of polymers may be used to constitute the polymeric shell. The polymer attached to the carbon black pigment may be cross-linked to enhance printing reliability further.

It is possible to 'encapsulate' the pigment with a polymer by changing solvent environment and/or pH to 'crash' a polymeric dispersant onto the surface of pigment particles. In this case the polymeric dispersant is associated with the pigment by means of physical adsorption, so this process is reversible and the dispersion stability is extremely sensitive to components of inks. If these components are good solvents for the encapsulating polymer, the dispersion stability may be compromised. In such a case, the polymer attached to the carbon black pigment is preferably cross-linked to prevent desorption of the polymer.

The polymeric shell surrounding the pigment core can comprise any suitable or desired polymer. In preferred embodiments, the polymeric shell can be selected from a member of the group consisting of a non-ionic polymer, an anionic polymer, and combinations thereof.

The encapsulation of a carbon black pigment is well-known in the art and the encapsulated carbon black pigment may be prepared by any suitable or desired process.

For example, US7544418 (HP) discloses an encapsulation of carbon black pigment for an aqueous dispersion in examples 5 to 7. Also US20140024763 A (CANON) discloses methods for encapsulation of carbon black pigments that can be used in aqueous inkjet inks, wherein the process for producing a pigment-encapsulating polymer dispersion, comprising the steps of: dispersing a liquid containing a monomer, a hydrophobe and a polymerization initiator into a water medium with a dispersant to obtain a monomer emulsion; and mixing the monomer emulsion with a pigment dispersion containing a self-dispersible pigment to which a hydrophilic group is bonded directly or through another atomic group and which is dispersed by the hydrophilic group, subjecting the resultant mixture to a shearing treatment and then polymerizing the monomer. Other suitable encapsulation methodologies are described in US20070224345 A (CLARIANT), US20140296395 A (DUPONT) and EP1245653 A2 (KODAK).

Encapsulated pigments for inkjet are also commercially available from Sun Chemical Company under the name MCX-059-SJ where X is C, M, Y, Bk representing respectively the colours cyan, magenta, yellow and black.

### Anti-Corrosion Compounds

The industrial inkjet printing method according to a preferred embodiment of the present invention uses an aqueous inkjet ink including an anti-corrosion compound selected from a compound including a six-membered aromatic ring having two hydroxyl groups in para-position and a compound according to Formula 2, 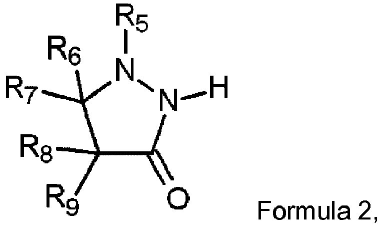 wherein R₅ is selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl and a substituted or unsubstituted heteroaryl group; R₆ to Rg are independently selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl and a substituted or unsubstituted heteroaryl group; or any of R₆ to Rg may represent the necessary atoms to form a five to eight membered ring.

In a preferred embodiment, R₅ is selected from the group consisting of a substituted or an unsubstituted alkyl group and a substituted or unsubstituted aryl group, a substituted or unsubstituted aryl group being particularly preferred, a substituted or unsubstituted phenyl group being the most preferred. Carboxylic acid groups or salts thereof and sulfonic acid groups or salts thereof are particularly preferred substituents. The cations in the salts of the carboxylic acid and the sulfonic acid groups or salts thereof are preferably monovalent and preferably selected from Li+, K⁺, Na⁺, NH₄+ and monovalent organic cations.

It has been observed that inkjet inks containing a compound according to Formula 2 with a carboxylic acid group or salt thereof tends to be more efficient and effective against corrosion than other type of acid groups or salts thereof.

In another preferred embodiment, R₆ and R₇ represent a hydrogen.

In another preferred embodiment, R₈ and R₉ are independently selected from the group consisting of a hydrogen and a substituted or unsubstituted alkyl group.

There is no limitation in combining the above preferred embodiments where possible.

Typical examples of components according to Formula 2 are given in Table 1, without being limited thereto. The compounds in Table 1 shown with an acid group may also be a salt thereof, while the compounds disclosed as a salt may either include any cation selected from the group consisting of Li⁺, Na⁺, K⁺, NH₄⁺ and monovalent organic cations, or otherwise may be an acid group.

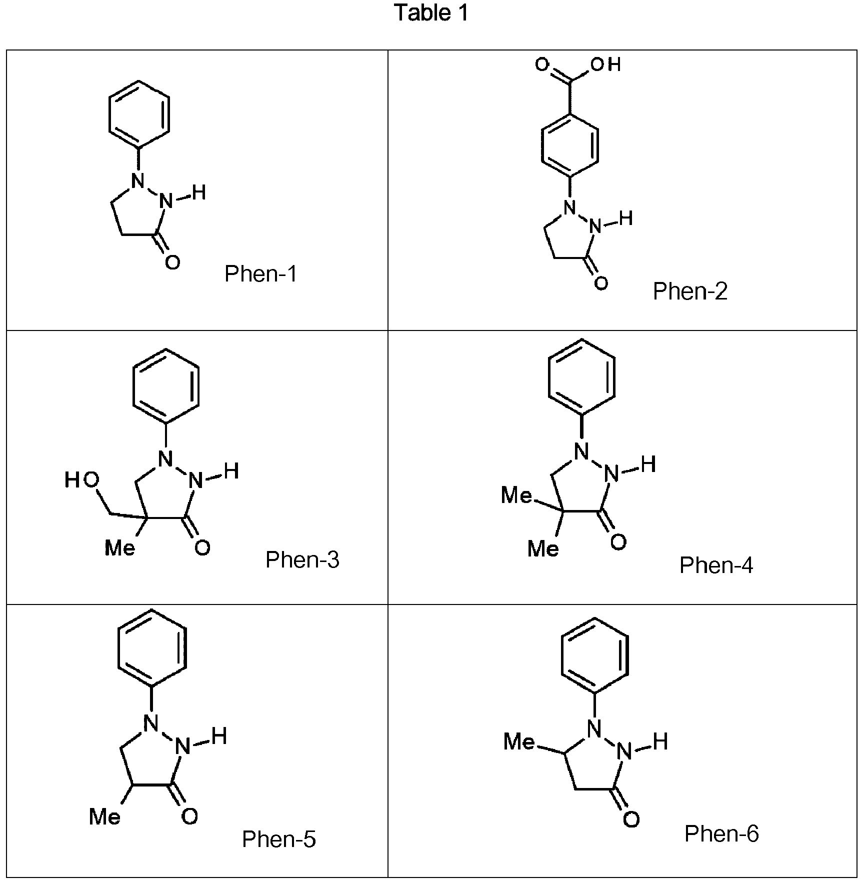

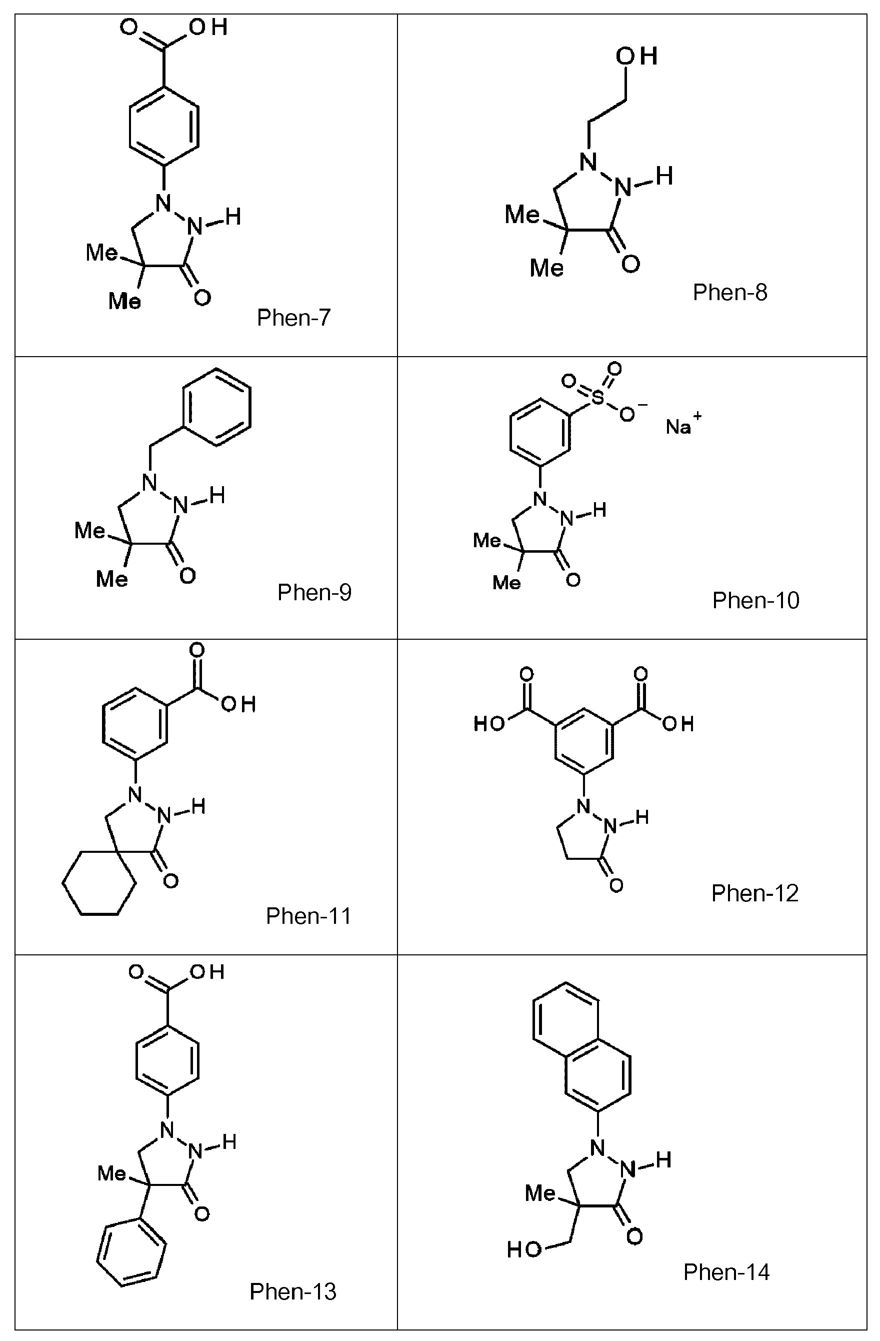

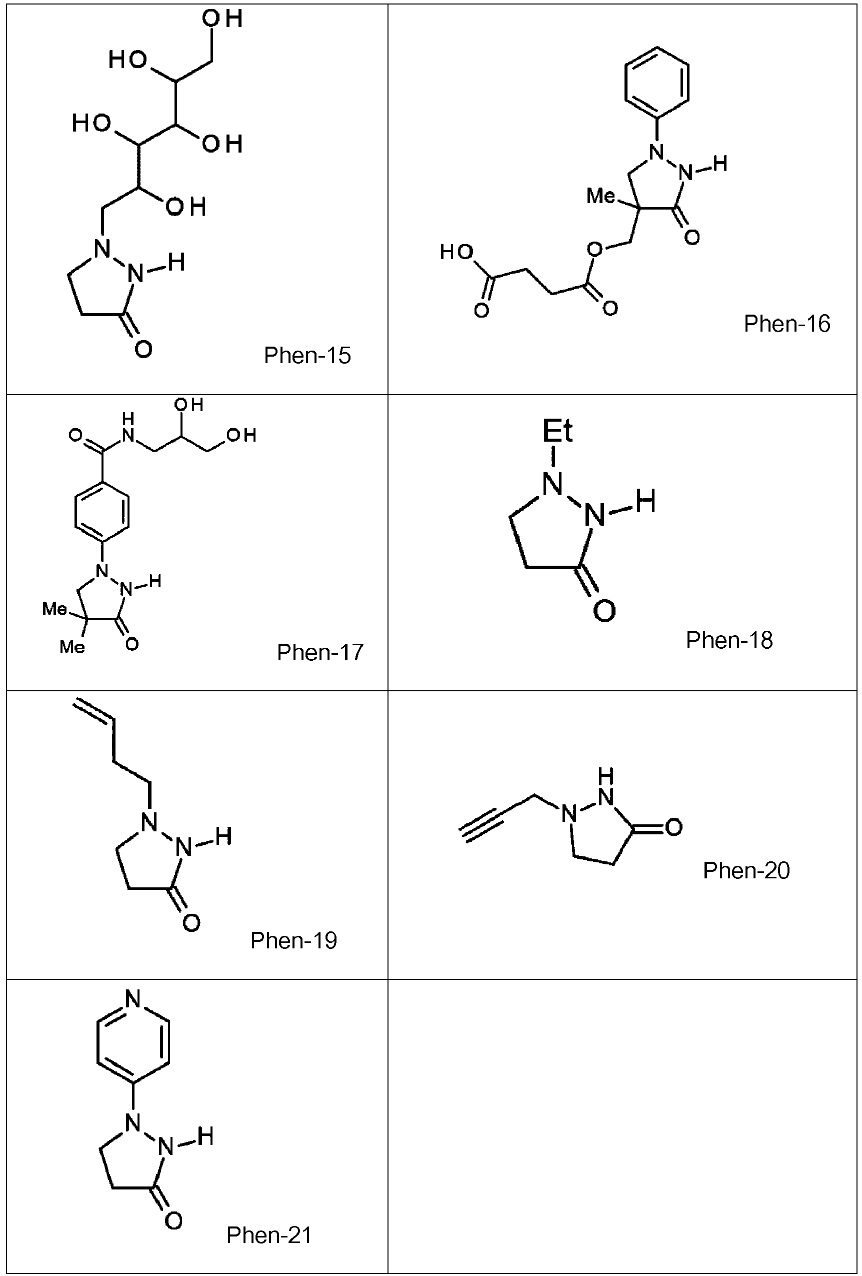

The anti-corrosion compound may also be a compound including a six-membered aromatic ring having two hydroxyl groups in para-position.

In a preferred embodiment, the compound including a six-membered aromatic ring having two hydroxyl groups in para-position is a compound according to Formula 1: 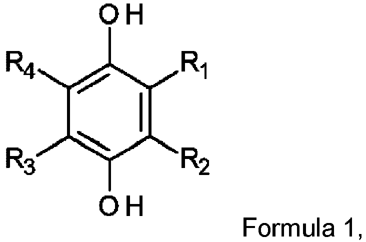 wherein R₁ to R₄ are independently selected from the group consisting of a hydrogen, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted aryl or heteroaryl group, a halogen, a hydroxyl group, an ether group, an ester group, a carbonate group, an amide group, a urethane group, a carboxylic acid group or salt thereof, a nitrile group an nitro, an amine group, a thiol group, a thioether group, a sulfonic acid group or salt thereof, a sulfonamide group, a sulfonate ester group, a sulfoxide group, a sulfone group, a phosphate group or salt thereof, a phosphate ester group, a phosphonate group or salt thereof, a phosphonate ester group, an aldehyde group and a ketone group, or wherein R₁ and R₂ and/or R₃ and R₄ may represent the necessary atoms to form a five to eight membered ring.

In a preferred embodiment, R₁ to R₄ are independently selected from the group consisting of a hydrogen, a substituted or unsubstituted alkyl group, a substituted or unsubstituted aryl group, a carboxylic acid group or salt thereof and a sulfonic acid group or salt thereof.

In an even more preferred embodiment, R₁ to R₄ are independently selected from the group consisting of a hydrogen, a C1 to C4 alkyl group, a substituted or unsubstituted phenyl ring, a carboxylic acid group or salt thereof and a sulfonic acid group or salt thereof.

Carboxylic acid groups or salts thereof and sulfonic acid groups or salts thereof are particularly preferred substituents. The cations in the salts of the carboxylic acid and the sulfonic acid groups or salts thereof are preferably monovalent and preferably selected from Li+, K⁺, Na⁺, NH₄+ and monovalent organic cations.

It has been observed that inkjet inks containing a compound according to Formula 1 with a carboxylic acid group or salt thereof tends to be more efficient and effective against corrosion than other type of acid groups or salts thereof.

In another preferred embodiment, R₁ and R₂ and R₃ and R₄ represent the necessary atoms to form a six membered ring, an aromatic six membered ring being particularly preferred.

There is no limitation in combining the above preferred embodiments where possible.

Typical examples of compounds according to Formula 1 are given in Table 2, without being limited thereto. The compounds in Table 2 shown with an acid group may also be a salt thereof, while the compounds disclosed as a salt may either include any cation selected from the group consisting of Li⁺, Na⁺, K⁺, and monovalent organic cations, or otherwise may be an acid group.

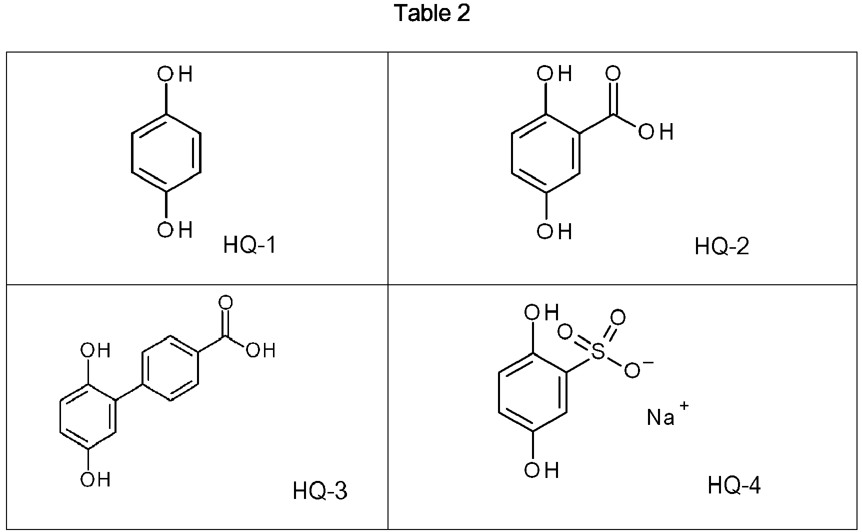

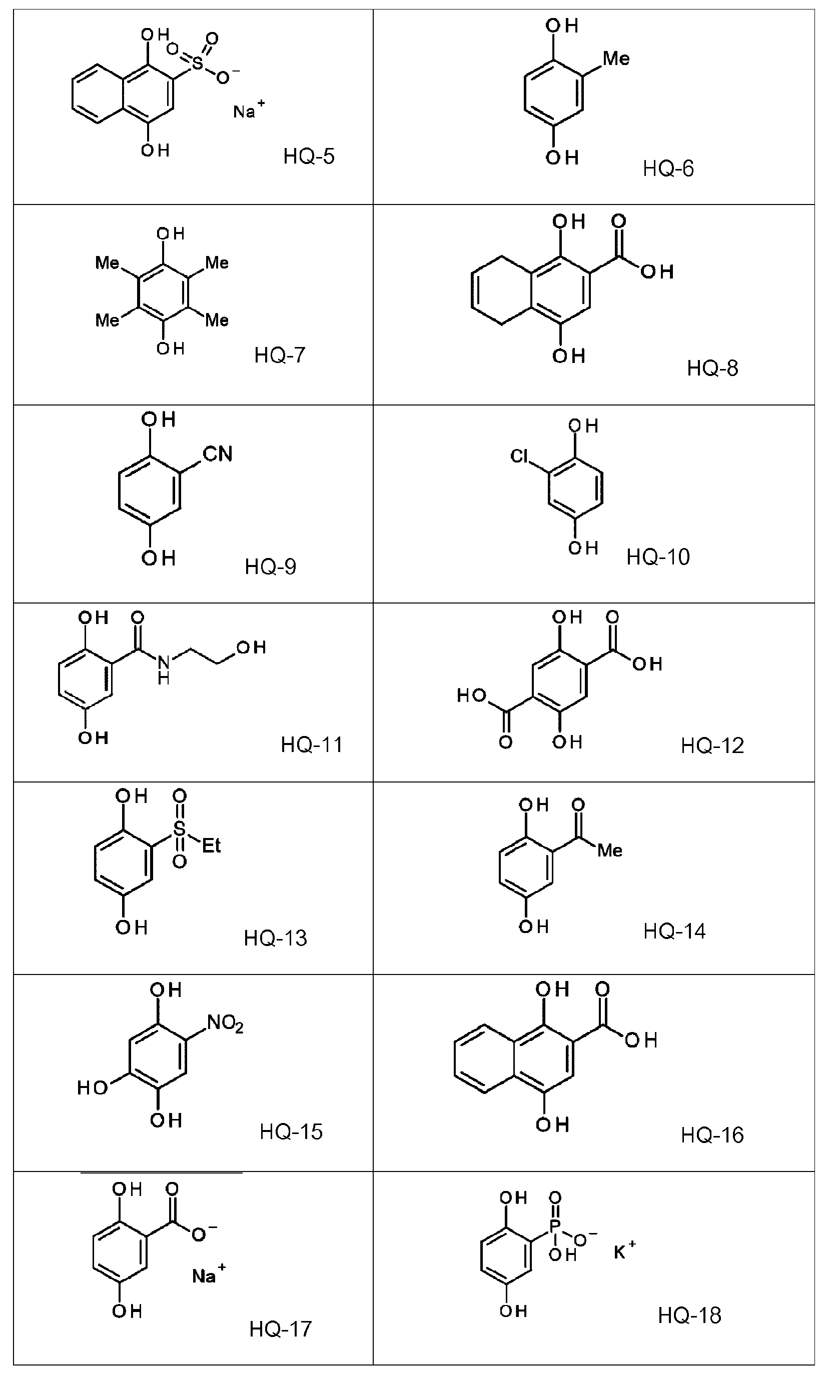

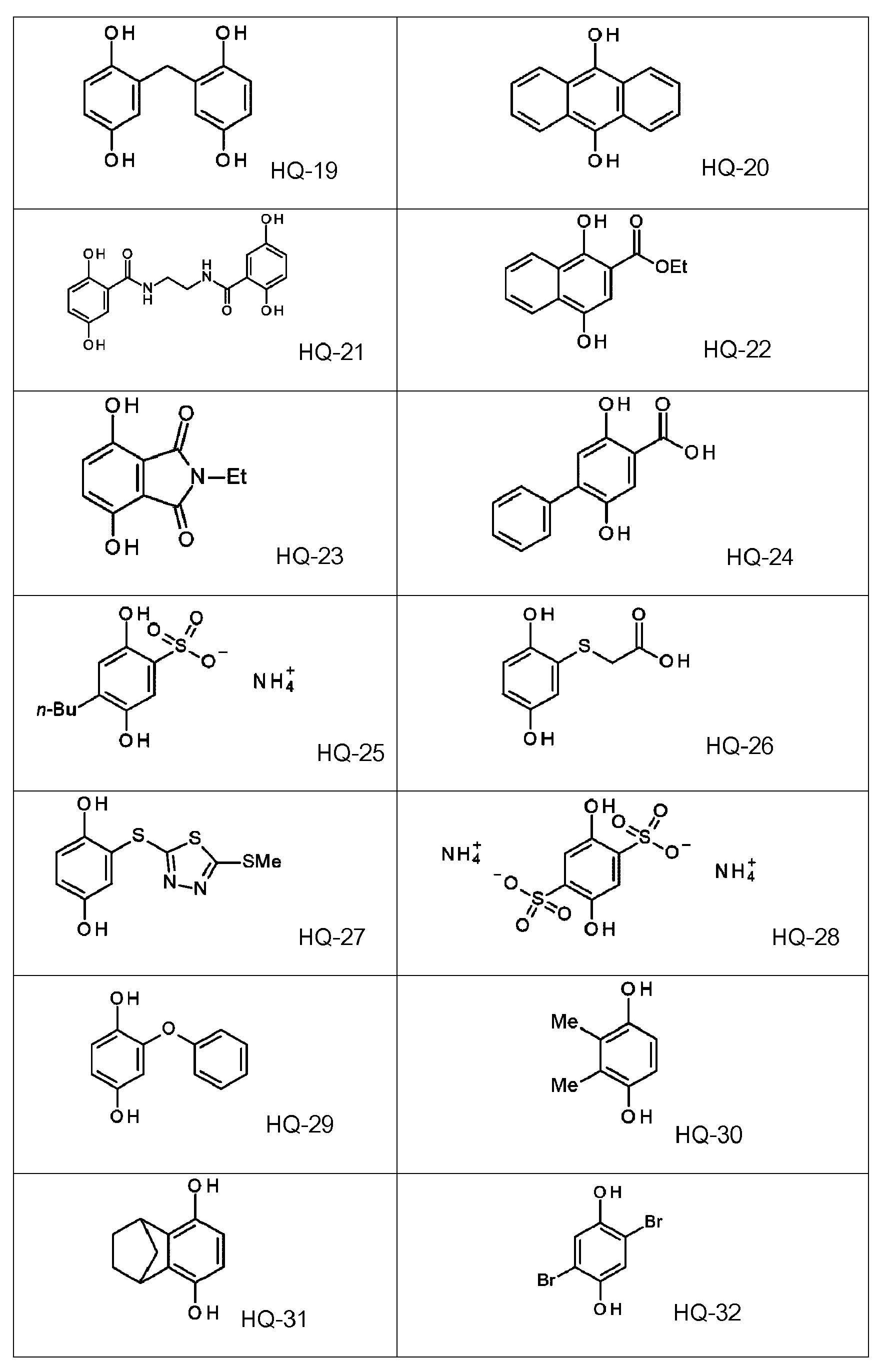

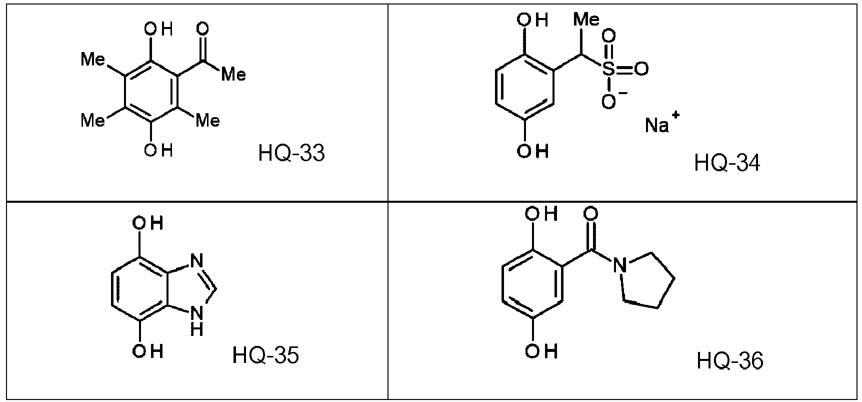

The compounds in Table 1 and Table 2 are readily available from commercial sources such as MERCK, SIGMA-ALDRICH and ACROS.

The anti-corrosion compound is preferably present in an amount between 0.01 wt% and 15 wt%, more preferably 0.05 wt% and 10 wt% and most preferably less than 5 wt%, or even 2 wt% with all weight percentages (wt%) based on the total weight of the aqueous inkjet ink.

In the most preferred embodiment of the aqueous inkjet ink, the compound according to Formula 1 or 2 is present in an amount of 0.01 to less than 2.0 wt% based on the total weight of the aqueous inkjet ink. In such concentrations no reduction of dispersion stability is observed.

The static surface tension of the aqueous inkjet ink is preferably in the range of 18 mN/m to 40 mN/m at 25°C, more preferably in the range of about 19 mN/m to about 30 mN/m at 25°C. In these ranges, the ink spreading is optimal for obtaining good image quality on, for example, décor paper used to manufacture decorative panels.

For having a good ejecting ability and fast inkjet printing, the viscosity of the one or more aqueous inkjet inks at a temperature of 32°C is preferably smaller than 30 mPa.s, more preferably smaller than 15 mPa.s, and most preferably between 1 and 10 mPa.s all at a shear rate of 1,000 s⁻¹. A preferred jetting temperature is between 20 and 40°C, more preferably in the range of 25 and 45°C, and most preferably less than 35°C.

The above described aqueous inkjet ink containing a carbon black pigment, is preferably part of an aqueous inkjet ink set. In a more preferred embodiment, all the pigmented aqueous inkjet inks in the ink set contain an anti-corrosion compound as described above.

### Colour Pigments

Instead of the aqueous inkjet ink containing a carbon black pigment, also other pigmented aqueous inkjet inks may be used in the industrial inkjet printing method of the invention.

The colorant in other aqueous pigmented inkjet inks preferably includes one or more colour pigments. Organic and/or inorganic pigments may be used, but preferably organic colour pigments are used because they allow to maximize colour gamut. A single colour pigment or a mixture of colour pigments may be used in the aqueous inkjet inks.

The pigment used in the pigmented inkjet ink according to the present invention may be cyan, magenta, yellow, red, orange, violet, blue, green, brown, white, mixtures thereof, and the like.

Suitable colour pigments may be chosen from those disclosed by HERBST, Willy, et al. Industrial Organic Pigments, Production, Properties, Applications. 3rd edition. Wiley - VCH, 2004. ISBN 3527305769.

The selection of colour pigments is usually determined by the application. For example, if the images to be reproduced are reproductions of wood then preferably a CRYK inkjet ink set is used instead of a CMYK inkjet ink set.

The pigment for the black aqueous ink used in the industrial inkjet printing method of the invention is a carbon black pigment (C.I. Pigment Black 7). Such carbon black pigments are readily available from commercial sources, such as Regal^{™} 400R, Mogul^{™} L, Elftex^{™} 320 from Cabot Co., or Carbon Black FW18, Special Black^{™} 250, Special Black^{™} 350, Special Black^{™} 550, Printex^{™} 25, Printex^{™} 35, Printex^{™} 55, Printex^{™} 90, Printex^{™} 150T from EVONIK., MA8 from MITSUBISHI CHEMICAL Co..

Also mixed crystals may be used as colour pigments. Mixed crystals are also referred to as solid solutions. For example, under certain conditions different quinacridones mix with each other to form solid solutions, which are quite different from both physical mixtures of the compounds and from the compounds themselves. In a solid solution, the molecules of the components enter into the same crystal lattice, usually, but not always, that of one of the components. The x-ray diffraction pattern of the resulting crystalline solid is characteristic of that solid and can be clearly differentiated from the pattern of a physical mixture of the same components in the same proportion. In such physical mixtures, the x-ray pattern of each of the components can be distinguished, and the disappearance of many of these lines is one of the criteria of the formation of solid solutions. A commercially available example is Cinquasia^{®} Magenta L 4540 from BASF.

The colour pigment particles in the inkjet ink should be sufficiently small to permit free flow of the ink through the inkjet printing device, especially at the ejecting nozzles. The average particle size is preferably smaller than 300 nm, more preferably smaller than 200 nm for achieving good jetting performance. It is also desirable to filter the aqueous inkjet inks to eliminate oversizers with a filter having a pore size of 1 µm, preferably 0.5 µm.

The average pigment particle size of colour pigment particles is best determined with equipment based upon the principle of dynamic light scattering. The ink is then usually diluted with water to a pigment concentration of 0.002 wt% for making the measurement.

The colour pigment is used in a pigment dispersion in an amount of 0.1 to 20 wt%, preferably 0.6 to 6 wt% based on the total weight of the pigment dispersion.

If superior quality on graininess is required, one or more light inkjet inks may be added to the aqueous pigmented inkjet ink set. A light inkjet ink preferably has the same pigment as a corresponding aqueous dark inkjet ink of the same colour, but at a much lower concentration. The aqueous inkjet ink set preferably contains one or more aqueous light inkjet inks containing a pigment in an amount of 0.1 to 1.2 wt% of a pigment, wherein the weight percentage (wt%) is based on the total weight of the aqueous light inkjet ink.

The inkjet ink may also include a white pigment as colorant, more preferably the white pigment is present in the inkjet ink in an amount of at 15 to 25 wt% based on the total weight of the inkjet ink. In the above range, good opacity is obtained with thin white ink layers, while the viscosity does not increase too much so that jetting performance is not impaired. For this, a titanium dioxide pigment, preferably rutile, is particularly preferred as the white pigment.

For surface treatment of the titanium oxide, an aqueous treatment or a gas phase treatment is applied, and an alumina-silica treating agent is usually employed. Untreated-, alumina treated- or alumina-silica treated-titanium oxide are employable. Alone or in addition to the previous surface treatments, an organic surface treatment may be used.

### Surfactants

The aqueous inkjet inks may contain at least one surfactant. The surfactant(s) can be anionic, cationic, non-ionic, or zwitter-ionic and are usually added in a total quantity less than 1 wt% based on the total weight of the inkjet ink and particularly in a total quantity less than 0.3 wt% based on the total weight of the inkjet ink. The total quantity above is expressed as dry solids.

Suitable surfactants for the aqueous inkjet inks include fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL^{™} 104, 104H, 440, 465 and TG available from AIR PRODUCTS & CHEMICALS INC.).

Preferred surfactants are selected from fluoro surfactants, such as fluorinated hydrocarbons. A particularly preferred commercial fluorosurfactant is Capstone^{™} FS3100 from DU PONT.

In one embodiment of the aqueous inkjet ink, the surfactant is fluorosurfactant, more preferably an alkoxylated fluorosurfactant, and most prefeably an alkoxylated fluorosurfactant containing a sulfonic acid group or a salt thereof.

In a preferred embodiment, the surfactant is a siloxane surfactant, preferably a polyether modified polydimethyl siloxane.

### Biocides

Suitable biocides for the aqueous inkjet inks of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are Proxel^{™} GXL, Proxel^{™} K and Proxel^{™} Ultra 5 available from ARCH UK BIOCIDES and Bronidox^{™} available from COGNIS.

A particularly preferred biocide is a1,2-benzisothiazolin-3-one based biocide.

A biocide is preferably added in an amount of 0.001 to 3.0 wt.%, more preferably 0.01 to 1.0 wt. %, each based on the total weight of the pigmented inkjet ink.

### Humectants

The aqueous inkjet ink preferably contains a humectant.

Suitable humectants include triacetin, N-methyl-2-pyrrolidone, 2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols. Preferred humectants are 2-pyrrolidone, glycerol and 1,2-hexanediol, the latter were found to be the most effective for improving inkjet printing reliability in an industrial environment.

A humectant is preferably added to the inkjet ink in an amount of 0.1 to 35 wt% of the formulation, more preferably 1 to 30 wt% of the formulation, and most preferably 2 to 25 wt% of the inkjet ink.

### pH-Adjusters

The aqueous inkjet ink may contain at least one pH adjuster. Suitable pH adjusters include NaOH, KOH, NEt₃, NH₃, HCl, HNO₃, H₂SO₄ and (poly)alkanolamines such as triethanol amine and 2-amino-2-methyl-1-propanol. Preferred pH adjusters are triethanol amine, NaOH and H₂SO₄.

The pH is preferably adjusted to a value between 7.5 and 10.0, more preferably between 8.0 and 9.0; the latter pH range has been observed to result in an improved ink stability.

### Other Additives

The ink may include other additives as necessary, in addition to the components described above.

Examples of the other components include known additives such as a discoloration inhibitor, an emulsion stabilizer, a penetration enhancer, an ultraviolet absorber, an antiseptic agent, an antifungal agent, a viscosity adjusting agent, a rust inhibitor, and a chelating agent.

Preferred UV absorbers include benzophenone compounds, benzotriazole compounds, salicylic acid ester compounds, and hydroxyphenyltriazine.

### Preparation of Inkjet Inks

The inkjet ink may be prepared by precipitating or milling the colour pigment in the dispersion medium in the presence of the polymeric dispersant(s).

Mixing apparatuses for making pigment dispersions may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

If the inkjet ink contains more than one pigment, the colour ink may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary widely depending upon the specific materials and the intended applications. The contents of the milling mixture comprise the mill grind and the milling media. The mill grind comprises pigment, dispersant and a liquid carrier such as water. For aqueous ink-jet inks, the pigment is usually present in the mill grind at 1 to 50 wt%, preferably 10 to 25 wt%, excluding the milling media. The weight ratio of pigment over dispersant is preferably 20:1 to 1:2.

The milling time can vary widely and depends upon the pigment, selected mechanical means and residence conditions, the initial and desired final particle size, etc.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

The pigment dispersion is preferably also filtrated with a filter of 1 µm, preferably 0.5 µm to remove so-called 'over-sizers, i.e. inefficiently milled pigment particles having a much larger particle size of 2 µm or so.

In general, it is desirable to make the colour ink in the form of a concentrated pigment dispersion, which is subsequently diluted to the appropriate concentration for use in the ink-jet printing system. This technique permits preparation of a greater quantity of pigmented ink from the equipment. If the mill grind was made in a solvent, it is diluted with water and optionally other solvents to the appropriate concentration. If it was made in water, it is diluted with either additional water or water miscible solvents to make a mill grind of the desired concentration. By dilution, the ink is adjusted to the desired viscosity, colour, hue, saturation density, and print area coverage for the particular application.

Viscosity can also be adjusted by using low molecular weight polyethylene glycols, for example having an average numerical molecular weight between 200 and 800. An example is PEG 200 from CLARIANT.

### Inkjet Printing Systems

An inkjet printing system according to a preferred embodiment of the invention comprises: a) a silicon-based MEMS inkjet print head and b) an aqueous inkjet ink as described above.

In a preferred embodiment of the inkjet printing system, the silicon-based MEMS inkjet print head is a piezoelectric through flow print head. Commercial examples of such a silicon-based MEMS piezoelectric through flow print heads are Samba^{®} G3L and G5L print heads from FUJIFILM DIMATIX.

In a multi-pass inkjet printing process, the inkjet print head scans back and forth in a transversal direction across the moving ink-receiver surface. Sometimes the inkjet print head does not print on the way back. Bidirectional printing is preferred for obtaining a high area throughput.

Another preferred printing method is by a "single pass printing process", which can be performed by using page wide inkjet print heads or multiple staggered inkjet print heads which cover the entire width of the ink-receiving surface. In a single pass printing process the inkjet print heads usually remain stationary and the substrate surface is transported under the inkjet print heads.

A dryer may be included in the inkjet printing device for removing at least part of the aqueous medium. Suitable dryers include devices circulating hot air, ovens, and devices using air suction.

A preferred drying device uses Carbon Infrared Radiation (CIR) to heat the outside of the paper substrate quickly.

Another preferred dryer is a NIR source emitting near infrared radiation. NIR-radiation energy quickly enters into the depth of the inkjet ink layer and removes water and solvents out of the whole layer thickness, while conventional infrared and thermo-air energy predominantly is absorbed at the surface and slowly conducted into the ink layer, which results usually in a slower removal of water and solvents.

An effective infrared radiation source preferably has an emission maximum between 0.8 and 1.5 µm. Such an infrared radiation source is sometimes called a NIR dryer.

In a preferred form the NIR radiation source is in the form of NIR LEDs, which can be mounted easily on a shuttling system of a plurality of inkjet print heads in a multi-pass inkjet printing device.

### Industrial applicability

The industrial inkjet printing methods described above can be used in many applications, but can be advantageously exploited in manufacturing methods of decorative laminates, printed carton and printed corrugated board. In these applications, the aqueous inkjet ink in accordance with the invention provides the required printing reliability needed in an industrial environment.

In these industrial inkjet printing methods, the substrate is preferably selected from the group consisting of décor paper, carton, corrugated board or a paper liner of or for corrugated board. The substrate preferably has an ink receiving layer for improving the image quality.

### Manufacturing Methods of Decorative Laminates

A method of manufacturing decorative laminates according to a preferred embodiment of the invention comprises the steps of: a) printing a décor paper as substrate with an industrial inkjet printing method as described above; b) impregnating the printed décor paper with a thermosetting resin; and c) heat pressing the thermosetting resin impregnated printed décor paper into a decorative laminate.

The decorative laminate is then preferably cut into decorative panels selected from the group consisting of flooring, kitchen, furniture and wall panels.

A preferred aqueous pigmented inkjet ink set for such an industrial inkjet printing method comprises:
- a cyan aqueous inkjet ink containing a beta-copper phthalocyanine pigment;
- a red aqueous inkjet ink containing a pigment selected from the group consisting of C.I. Pigment Red 57/1, C.I. Pigment Red 122, C.I. Pigment Red 170, C.I. Pigment Red 175, C.I. Pigment Red 176, C.I. Pigment Red 187, C.I. Pigment Red 188, C.I. Pigment Red 207, C.I. Pigment Red 242, C.I. Pigment Red 254, C.I. Pigment Red 272 and mixed crystals thereof;
- a yellow aqueous inkjet ink containing a pigment selected from C.I. Pigment Yellow 74 C.I. Pigment Yellow 83, C.I. Pigment Yellow 97, C.I. Pigment Yellow 110, C.I. Pigment Yellow 120, C.I. Pigment Yellow 138, C.I. Pigment Yellow 150, C.I. Pigment Yellow 151, C.I. Pigment Yellow 154, C.I. Pigment Yellow 155, C.I. Pigment Yellow 175, C.I. Pigment Yellow 180, C.I. Pigment Yellow 181, C.I. Pigment Yellow 194, C.I. Pigment Yellow 213, C.I. Pigment Yellow 214 and mixed crystals thereof; and
- a black aqueous inkjet ink containing a carbon black pigment. Such an ink set allows to accurately reproduce wood colours in decorative flooring laminate panels.

The thermosetting resin impregnated printed décor paper is preferably heat pressed between a core layer and a protective layer and cut into a decorative panel selected from the group consisting of flooring, kitchen, furniture and wall panels. The thermosetting resin used is preferably a melamine based resin.

The décor paper preferably includes multiple ink receiving layers with an outermost ink receiving layer containing no inorganic pigment or an amount of inorganic pigment smaller than that of one or more ink receiving layers located between the paper substrate and the outermost ink receiving layer. The advantage is that the printing reliability is enhanced. For fast drying, the ink receiving layers contain high amounts of inorganic pigments, such as fumed silica, which can create dust problems due to the transporting of the paper substrate in the inkjet printer, especially in single pass inkjet printing where very high speeds for transporting the paper substrate below the print heads are used. This dust problem is reduced by having an outermost ink receiving layer containing no or only a small amount of inorganic pigments.

The one or more ink receiving layers preferably include an inorganic pigment selected from the group consisting of alumina hydrates, aluminum oxides, aluminum hydroxides, aluminum silicates, and silica's. The one or more ink receiving layers contain a polymeric binder preferably selected from the group consisting of polyvinylalcohol, a vinylalcohol copolymer or modified polyvinyl alcohol. Preferably, the one or more ink receiving layers contain a crushing agent selected from the group consisting of a cationic polymeric binder, a cationic inorganic pigment and multivalent salts.

In one embodiment, the paper substrate is a coloured paper substrate, more preferably a bulk coloured paper substrate. The use of a coloured paper substrate reduces the amount of inkjet ink required to form the colour image.

It was observed that improved image quality is obtained when the inkjet printing is performed in a manner that the wood nerves in the colour image are extending in a direction substantially corresponding to the inkjet printing direction. For a single pass inkjet printing process, the inkjet printing direction is the transport direction of the paper substrate. In a multi-pass inkjet printing process, the inkjet printing direction is the scanning direction of the print heads.

In a preferred embodiment, the grayscale inkjet printing method is used to manufacture decorative panels including a tongue and a groove capable of achieving a glue less mechanical join between decorative panels.

The inkjet printing method is preferably part of a DPL process, wherein the decorative layer is taken up in a stack to be pressed with a core layer and a protective layer, and preferably also a balancing layer. It is of course not excluded that the method of the invention would form part of a CPL (Compact Laminate) or an HPL (High Pressure Laminate) process in which the decorative layer is hot pressed at least with a plurality of resin impregnated core paper layers, e.g. of so called Kraft paper, forming a substrate underneath the decorative layer, and wherein the obtained pressed and cured laminate layer, or laminate board is, in the case of an HPL, glued to a further substrate, such as to a particle board or an MDF or HDF board.

In a preferred embodiment, a protective layer containing a thermosetting resin impregnated paper is applied onto the inkjet printed colour image. The thermosetting resin may be a colored thermosetting resin to reduce the amount of inkjet ink to be printed.

### Manufacturing Method of Printed Packaging

A manufacturing method of printed folded carton or printed corrugated cardboard according to a preferred embodiment of the invention comprises the steps of: a) providing the paper surface of a substrate with an ink receiving layer; and b) inkjet printing an image onto the ink receiving layer with an aqueous inkjet ink as described above.

In a preferred embodiment of the manufacturing method, the inkjet printing is performed according to a single pass printing process. Single pass inkjet machines run at very high speeds, some even up to 150 m/min.

Although inkjet printing may be performed directly on a corrugated cardboard having one or more ink-receiving layers, the manufacturing method preferably includes a step c) of laminating the inkjet printed paper linerboard onto a fluted paperboard of a corrugated cardboard. The latter is advantageous for image quality.

The manufacturing method of printed folded carton or printed corrugated cardboard preferably also includes a step of applying a protective varnish layer on the inkjet printed image. Such a protective varnish layer generally also increases the glossiness of the inkjet printed image, which is beneficial for the image quality.

The ink receiving layer and the varnish are preferably applied by jetting with inkjet print heads. In such a case, the ink receiving layer is usually referred to as a jettable primer.

In another particularly preferred embodiment of the manufacturing method, an ink receiving layer and/or a protective varnish layer are applied by flexographic printing. This is beneficial for productivity. The ink receiving layer and protective varnish layer can also be applied by coating, e.g. using a bar-coater or a knife coater. However, coating methods generally create more waste as it takes some time to reach a stable coating state of good quality. Flexographic printing has the advantage that the flexographic printing rolls can be easily incorporated in the inkjet printing system and operated at the same printing speed.

The preferred corrugated cardboard in the present invention is single wall or double wall, more preferably single wall corrugated cardboard as this is sufficiently strong and easy to crease. Single face corrugated cardboard generally has insufficient strength to hold the merchandise articles, while triple wall cardboard is often more difficult to crease into a packaging box.

The paper board used in corrugated cardboard, such as Kraft paper, has usually a brownish colour. In a preferred embodiment of the manufacturing method described above, the paper liner board has a white colour. By having a white background, an enhanced image quality is obtained. Inkjet printed colours on the white paper liner board have a much higher vibrancy then when printed on brownish Kraft paper linerboard. The white colour background also contributes to the customer experience as the customer regards this as a more luxurious product. Alternatively, the white background may be applied as a layer by coating or printing prior to inkjet printing. However, a white paper liner board is preferred, as this enhances reliability of the printing process by eliminating possible problems that may occur during coating or printing the white layer. Suitable paper liner board having a white background include white top kraftliner and white coated kraftliner.

### EXAMPLES

### Materials

All materials used in the following examples were readily available from standard sources such as Sigma-Aldrich (MERCK, Belgium) and Acros (Belgium) unless otherwise specified. Where used, water is demineralised water.

**PBL7** is an abbreviation used for Printex^{™} 90, a carbon black pigment from EVONIK.

**ID-1** is an abbreviation used for Edaplan^{™} 482, an acrylic polymeric dispersant from MUNZING containing about 6 mol% of a long aliphatic chain (meth)acrylate and carboxylic acid groups. ID-1 has an acid value of 175 mg KOH/g.

**Proxel** is an abbreviation used for Proxel^{™} K (5% aqueous solution of 1,2-benzisothiazolin-3-one) available from YDS CHEMICALS NV.

**PEG 200** is a polyethylene glycol having an average molecular weight of 200 from CLARIANT.

**NaOH-sol** is an aqueous solution of 81 g of sodium hydroxide in water.

**TEA** is triethanol amine.

**CAH-1** is a catechol compound represented by: 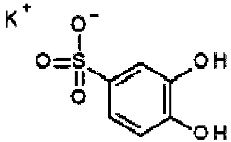 (CASRN29571-26-4, preparation : Westervelt et al., Tappi, 65(5), 179-180 (1982))

CAH-2 is the sodium salt of 3,4 dihydroxy benzoic acid: 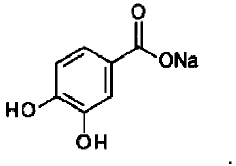 (CASRN24885-75-4, preparation : Saito et al., Helvetica Chimica Acta, 89(7), 1395-1407 (2006))

**CAH-3** is a catechol compound represented by: 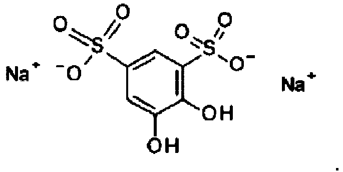 (CASRN156245-29-3, preparation : FR2902096 A1 (Rhodia Recherches et Technology))

**CAP-1** is a compound represented by: 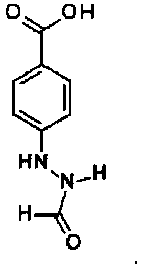 CAP-1 has been prepared according to the scheme given below : 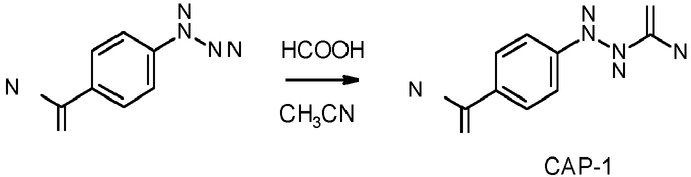 76 g (0.5 mol) of 4-hydrazinobenzoic acid was added to 250 ml acetonitrile, followed by the addition of 62.5 g (1.15 mol) of formic acid (85%). Upon addition of the formic acid, the temperature rose to 34°C. The reaction mixture was heated to reflux and the reaction was allowed to continue for two hours at reflux. The mixture was allowed to cool down and CAP-1 was isolated by filtration, washed with acetonitrile and dried. 83 g (y : 92%) of CAP-1 was isolated (TLC analysis on TLC Silica gel 60F254 supplied by Merck, eluent methylene chloride/acetic acid/methanol 86/4/10, Rf = 0.26)

**AH-1** is hydroquinone (supplied by TCI Europe), a compound to HQ-1 in Table 2.

**AH-2** is a compound (CASRN4955-90-2, supplied by TCI Europe) corresponding to HQ-17 in Table 2.

**AH-3** is a compound (CASRN490-79-9, supplied by TCI Europe) corresponding to HQ-2 in Table 2.

**AH-4** is a compound (CASRN7110-75-0, preparation : JP2009185165A (Kawasaki Kasei Chemicals, Ltd.)) corresponding to HQ-5 in Table 2.

**AP-1** is a compound corresponding to Phen-2 in Table 1.

The synthesis of AP-1 is given below: 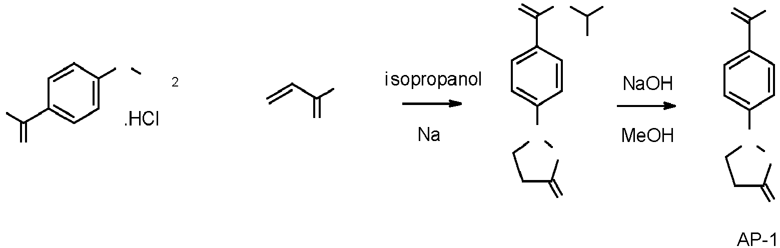 92 g (4 mol) sodium was added portion wise to 4 liter isopropanol. During the addition the reaction mixture was allowed to reflux gently. 405 g (2 mol) methyl-4-hydrazinylbenzoate hydrochlorate was added. Upon addition a thick suspension was formed. 172 g (181 ml, 2 mol) acrylic acid was added and the reaction was allowed to continue for two hours at reflux. After two hours, 2 liter isopropanol was removed by distillation and the mixture was allowed to cool down to room temperature. 2 liter of a 5N H₂SO₄ solution was added while stirring. An additional liter water was added followed by the addition of 3 liter methylene chloride. The organic fraction was isolated, extracted with 1 liter water and 1 liter of a saturated sodium chloride solution and dried. The solvent was removed under reduced pressure and the crude isopropyl ester was recrystallized from 2 liter isopropanol. The isopropyl ester was isolated by filtration, washed twice with 150 ml isopropanol and dried. 349 g (y : 79%) of the isopropyl ester was isolated (TLC analysis on TLC Silica gel 60F₂₅₄ supplied by Merck, eluent methylene chloride/acetic acid/methanol 95/2/3, R_{f} = 0.4).

340 g (1.37 mol) of the isopropyl ester was added to 1545 ml of a 5N NaOH solution. 1 liter methanol was added. Upon addition of the methanol the temperature rose to 40°C. The mixture was heated to reflux and the reaction was allowed to continue for 3 hours at reflux. Based on a TLC analysis (TLC analysis on TLC Silica gel 60F₂₅₄ supplied by Merck, eluent methylene chloride/acetic acid/methanol 95/2/3), where no starting material was detectable anymore, the reaction was stopped. The reaction mixture was allowed to cool down to room temperature and 1.6 liter of a 5N HCl-solution was added. AP-1 precipitated from the medium, was isolated by filtration, washed twice with 100 ml water and dried. 301 g of CAP-1 was isolated, still containing a limited amount of salts. CAP-1 was considered sufficiently pure to be used in an ink formulation, as confirmed by ¹H-NMR analysis.

IJDP is a 80 µm thick décor paper coated in order with a dual primer Uniprim^{®} DA and DB available from UNILIN at a thickness of 10 µm (1.1 dilution of primer DA) and 9 µm (1.32 dilution of primer DB).

### Measurement methods

### 1. Viscosity

The viscosity of an inkjet ink was measured, using a Brookfield DV-II+ viscometer at 32°C at a shear rate of 1,000 s⁻¹.

### 2. Average Particle Size (Concentrated Pigment Dispersion)

The average particle size of pigment particles in a pigment dispersion was determined by photon correlation spectroscopy at a wavelength of 633 nm with a 4mW HeNe laser on a diluted sample of the pigmented inkjet ink. The particle size analyzer used was a Malvern^{™} nano-S available from Goffin-Meyvis.

The sample was prepared by addition of one drop of ink to a cuvet containing 1.5 mL water and mixed until a homogenous sample was obtained. The measured particle size is the average value of 3 consecutive measurements consisting of 6 runs of 20 seconds.

### 3. Average Particle Size (Inkjet Ink)

An ink sample is diluted with water to a pigment concentration of 0.002 wt%. The average particle size of pigment particles is determined with a Nicomp^{™} 30 Submicron Particle Analyzer based upon the principle of dynamic light scattering.

For good ink jet characteristics (jetting and print quality) the average particle size of the dispersed particles is preferably below 250 nm.

### 4. Corrosion Test

The corrosion inhibition is evaluated via a dip test. A 25 mL plastic container is filled for half of its volume with an inkjet ink. A substrate is then placed in the plastic container so that half of the substrate is exposed to the inkjet ink in the container. The plastic container is then closed and put in an oven at 60°C for a certain number of days. The visual evaluation is performed according to the criteria of Table 4.

**Table 4**

| **Score** | **Criterion (via visual observation by human eye)** |
|---|---|
| **A** | No corrosion visible |
| **B** | Small line visible on substrate at separation air-ink in container |
| **C** | Discoloration of substrate part that was dipped in the ink |
| **D** | Clear corrosion of substrate part that was dipped in the ink |

The desired result for the corrosion-test is a score "A".

Two different substrates are used for this dip test:
1) a Si<100>-wafer substrate; and
2) a NWC Si-wafer substrate, available as Non Wetting Coating test coupons from FUJIFILM DIMATIX, as used for the Samba^{®} G3L print heads. NWC is a non-wetting coating present on a Si-wafer that forms the nozzle plate. A durable non-wetting coating is applied for high printing reliability and ease of maintenance of the print head.

### 5. Optical Density

The optical density OD is determined by coating an inkjet ink with a bar coater on a décor paper IJDP at a wet layer thickness of 6 µm. After coating, the ink layer was dried for 2 min at 60°C. The optical density was measured with a Gretag^{®} SPM50 van MacBeth

### EXAMPLE 1

This example illustrates how to prepare an inkjet ink containing a carbon black pigment providing good corrosion resistance to an inkjet print head having a silicon-based material contacting the aqueous inkjet ink by including both aspects of the invention for having a good corrosion resistance, i.e. the amount of polymer attached to the carbon black pigment and the addition of a specific anti-corrosion compound.

### Preparation of Concentrated Pigment Dispersion CPK

A concentrated aqueous pigment dispersion CPK was made by mixing a composition according to Table 5 for 30 minutes using a Disperlux^{™} mixer.

**Table 5**

| **wt% of component** | **CPK** |
|---|---|
| **PB7** | 15.00 |
| **ID-1** | 7.50 |
| **Proxel** | 0.02 |
| **Water** | 77.48 |

The concentrated aqueous pigment dispersion was then milled using a Dynomill^{™} RL with 0.4 mm yttrium stabilized zirconium beads YTZ^{™} Grinding Media (available from TOSOH Corp.). The mill was filled for 41.9% of its volume with the grinding beads and the dispersion was milled for 151 minutes in recirculation at a rotation speed of 4500. After milling, the dispersion is separated from the beads. The concentrated aqueous pigment dispersion CPK served as the basis for the preparation of a black aqueous inkjet ink. The average particle size measured with a Malvern^{™} nano-S was 131 nm.

### Preparation of inkjet inks

The inkjet inks INV-1 and INV-2 were prepared by mixing in water the components in the amounts as listed in Table 6. Then the pH of the inkjet ink was then adjusted to 8.5 by the addition of NaOH-sol. Then the concentrated aqueous pigment dispersion CPK was added. The pH of the inkjet ink was then adjusted to 8.5 by the addition of NaOH-sol., after which the remainder of water was added to complete the ink composition to 100 wt%.

**Table 6**

| **wt% of:** | **INV-1** | **INV-2** |
|---|---|---|
| **Water** | 20.00 | 20.00 |
| **AH-2** | 0.10 | 0.10 |
| **1,2-hexanediol** | 3.00 | 3.00 |
| **Glycerol** | 20.00 | 20.00 |
| **PEG200** | 19.00 | 19.00 |
| **Proxel** | 0.20 | 0.20 |
| **NaOH-sol** | until pH=8.5 | until pH=8.5 |
| **CPK** | 16.65 | 25.35 |
| **NaOH-sol** | until pH=8.5 | until pH=8.5 |
| **Water** | remainder | remainder |
| **Total** | 100.00 | 100.00 |

### Evaluation and Results

The viscosity and average particle size (Nicomp) were determined for the inkjet inks. A corrosion test was performed for a duration of 14 days at 60° C. The results are shown in Table 7.

**Table 7**

| **Inkjet Ink** | **Viscosity (mPa.s)** | **Average Particle Size (nm)** | **Corrosion test score** | |
|---|---|---|---|---|
| | | | **Si<100>-wafer** | **NWC Si-wafer** |
| **INV-1** | 4.9 | 153 | B | A |
| **INV-2** | 6.0 | 154 | B | A |

It has been observed that carbon black can somehow catalyze the corrosion of (NWC) Si-wafers. From Table 7, it can be seen that a 50% increase in carbon black pigment concentration (from 2.5 wt% in INV-1 to 3.8 wt% in INV-2) does not even reduce the corrosion resistance due to the presence of the compound AH-2.

### EXAMPLE 2

This example illustrates the importance of the amount of polymer attached to the carbon black pigment of the aqueous inkjet ink for the first aspect of the invention.

### Preparation of Aqueous Inkjet Inks

The comparative inkjet inks COMP-1 to COMP-8 were prepared to have a composition according to Table 8, while the inventive inkjet inks INV-3 to INV-6 were prepared to have a composition according to Table 9. A styrene maleic anhydride salt was used as dispersant ID-2 in all inkjet inks for dispersing the pigment. A second polymeric dispersant ID-1 was added as a 50% aqueous solution to the comparative inkjet inks COMP-4 to COMP-8 and the inventive inkjet inks INV-3 to INV-6. The pH of the inkjet ink was adjusted with droplets of TEA (triethanolamine) to reach a pH of 8.5 before the pigment dispersion was added. After the pigment dispersion and the optional dispersant ID-1-sol was added, the pH was again adjusted with droplets of TEA (triethanolamine) to reach a pH in the range of 8.0 to 9.0, where after the remainder of water was added to complete the ink composition to 100 wt%. The abbreviation "rem."stands for remainder. The pH, the viscosity and the average particle size were measured and are also shown in Table 8 and Table 9.

**Table 8**

| **wt% of** | **COMP-1** | **COMP-2** | **COMP-3** | **COMP-4** | **COMP-5** | **COMP-6** | **COMP-7** | **COMP-8** |
|---|---|---|---|---|---|---|---|---|
| **1,2-hexanediol** | 3.00 | 3.00 | 3.00 | 3.00 | 3.00 | 3.00 | 3.00 | 3.00 |
| **Glycerol** | 20.00 | 20.00 | 20.00 | 20.00 | 20.00 | 20.00 | 20.00 | 20.00 |
| **PEG200** | 19.00 | 19.00 | 19.00 | 19.00 | 19.00 | 19.00 | 19.00 | 19.00 |
| **Proxel** | 0.20 | 0.20 | 0.20 | 0.20 | 0.20 | 0.20 | 0.20 | 0.20 |
| **water** | 21.60 | 14.93 | 8.27 | 8.27 | 21.60 | 21.60 | 14.93 | 8.27 |
| **TEA** | to reach a pH of 8.5 | | | | | | | |
| **PB7** | 3.00 | 4.00 | 5.00 | 5.00 | 3.00 | 3.00 | 4.00 | 5.00 |
| **ID-2** | 0.80 | 1.07 | 1.33 | 1.33 | 0.80 | 0.80 | 1.07 | 1.33 |
| **water** | 16.20 | 21.60 | 27.00 | 27.00 | 16.20 | 16.20 | 21.60 | 27.00 |
| **ID-1-sol** | | | | 2.00 | 4.00 | 8.00 | 8.00 | 8.00 |
| **TEA** | to reach a pH in range of 8.0 to 9.0 | | | | | | | |
| **water** | rem. | rem. | rem. | rem. | rem. | rem. | rem. | rem. |
| **Total** = | 100 | 100 | 100 | 100 | 100 | 100 | 100 | 100 |

| **Measurements** | **COMP-1** | **COMP-2** | **COMP-3** | **COMP-4** | **COMP-5** | **COMP-6** | **COMP-7** | **COMP-8** |
|---|---|---|---|---|---|---|---|---|
| **pH** | 8.6 | 8.5 | 8.6 | 8.4 | 8.3 | 8.3 | 8.2 | 8.2 |
| **Viscosity (mPa.s)** | 3.5 | 4.0 | 4.9 | 5.8 | 4.2 | 5.9 | 6.9 | 7.8 |
| **Average Particle size (nm)** | 128 | 125 | 131 | 132 | 129 | 1328 | 133 | 134 |

**Table 9**

| wt% of | **INV-3** | **INV-4** | **INV-5** | **INV-6** |
|---|---|---|---|---|
| **1,2-hexanediol** | 3.00 | 3.00 | 3.00 | 3.00 |
| **Glycerol** | 20.00 | 20.00 | 20.00 | 20.00 |
| **PEG200** | 19.00 | 19.00 | 19.00 | 19.00 |
| **Proxel** | 0.20 | 0.20 | 0.20 | 0.20 |
| **water** | 19.60 | 12.93 | 10.93 | 4.27 |
| **TEA** | to reach a pH of 8.5 | | | |
| **PB7** | 3.00 | 4.00 | 4.00 | 5.00 |
| **ID-2** | 0.80 | 1.07 | 1.07 | 1.33 |
| **water** | 16.20 | 21.60 | 21.60 | 27.00 |
| **ID-1-sol** | 2.00 | 2.00 | 4.00 | 4.00 |
| **TEA** | to reach a pH in range of 8.0 to 9.0 | | | |
| **waterb** | rem. | rem, | rem, | rem, |
| **Total =** | 100 | 100 | 100 | 100 |

| **Measurements** | **INV-3** | **INV-4** | **INV-5** | **INV-6** |
|---|---|---|---|---|
| **pH** | 8.4 | 8.4 | 8.4 | 8.4 |
| **Viscosity (mPa.s)** | 3.9 | 4.7 | 5.2 | 6.1 |
| **Average Particle size (nm)** | 130 | 129 | 130 | 130 |

### Evaluation and Results

The aqueous inkjet inks are jetted with a Samba^{®} 3GL print head from FUJIFILM DIMATIX at a jetting temperature of 32°C. It was found that the optimal viscosity at 32°C for achieving good printing reliability was 3.0 to 6.5 mPa.s. The optical density OD was measured for comparative inkjet inks COMP-1 to COMP-8 and the inventive inkjet inks INV-3 to INV-6 on a décor paper IJDP. For a good covering power by a black inkjet ink, the optical density OD should at least be 1.45.

**Table 10**

| **Inkjet Ink** | **wt% CB** | **P/CB ratio** | **Viscosity (mPa.s)** | **OD** |
|---|---|---|---|---|
| **COMP-1** | 3.00 | 0.27 | 3.5 | 1.46 |
| **COMP-2** | 4.00 | 0.27 | 4.0 | 1.52 |
| **COM P-3** | 5.00 | 0.27 | 4.9 | 1.53 |
| **COMP-4** | 5.00 | 0.47 | 5.8 | 1.51 |
| **COM P-5** | 3.00 | 0.93 | 4.2 | 1.41 |
| **COM P-6** | 3.00 | 1.60 | 5.9 | 1.32 |
| **COMP-7** | 4.00 | 1.27 | 6.9 | 1.43 |
| **COMP-8** | 5.00 | 1.07 | 7.8 | 1.45 |
| **INV-3** | 3.00 | 0.60 | 3.9 | 1.45 |
| **INV-4** | 4.00 | 0.52 | 4.7 | 1.51 |
| **INV-5** | 4.00 | 0.77 | 5.2 | 1.48 |
| **INV-6** | 5.00 | 0.67 | 6.1 | 1.49 |

It can be seen in Table 10 that the addition of carbon black pigment and/or pigment dispersant increases with the viscosity of the inkjet ink. For the same content of carbon black pigment in the ink, it can also be seen that the optical density OD decreases (see e.g. for 3 wt% of carbon black pigment: COMP-1 / INV-3 / COMP-5 / COMP-6) with an increasing weight ratio P/CB. This can be compensated by increasing the amount of carbon black pigment (see e.g. COMP-1 / COMP-2 / COMP-3). However, such compensation for optical density OD is no longer possible when too high weight ratios of P/CB are used (see e.g. COMP-7 and COMP-8).

For number of the above aqueous inkjet inks a corrosion test was then performed for a duration of 14 days at 60°C. The results are shown in Table 11.

**Table 11**

| **Inkjet Ink** | **wt% CB** | **P/CB ratio** | **Corrosion Test Score** | |
|---|---|---|---|---|
| | | | **Si<100>-wafer** | **NWC Si-wafer** |
| **COMP-1** | 3.00 | 0.27 | D | D |
| **COMP-4** | 5.00 | 0.47 | B | D |
| **INV-4** | 4.00 | 0.52 | B | B |
| **INV-5** | 4.00 | 0.77 | A | B |
| **INV-6** | 5,00 | 0,67 | A | B |

From Table 11, it should be clear that severe corrosion is obtained if the P/CB ratio is less than 0.50. Only the inventive inkjet inks INV-4 to INV-6 were capable of achieving a good optical density and corrosion resistance at the viscosity required for achieving good printing reliability.

### EXAMPLE 3

This example illustrates suitable anti-corrosion compounds and the importance of the hydroxyl groups being in a para-position on an aromatic ring for having a good corrosion resistance by the second aspect of the invention. In order to demonstrate the effectiveness of the anti-corrosion compounds, aqueous inkjet inks were prepared having a weight ratio P/CB of 0.27, i.e. less than the lower limit of 0.50 necessary for the first aspect of the invention.

### Preparation of Inkjet Inks

The comparative inkjet inks C-1 to C-9 were prepared to have a composition according to Table 12, while the inkjet inks I-1 to I-12 were prepared to have a composition according to Table 13 and Table 14. A styrene maleic anhydride salt was used as dispersant ID-2 in all inkjet inks. The pH of the inkjet ink was adjusted to the indicated value in Table 12 to Table 14 by the addition of TEA (triethanolamine), the pigment dispersion was then added, where after the pH was if necessary adjusted to a value in the range of 8.0 to 9.0. Then the remainder of water was added to complete the ink composition to 100 wt%. The abbreviation "rem. " stands for remainder. The pH was measured and is shown in Table 12 to Table 14.

**Table 12**

| **wt% of** | **C-1** | **C-2** | **C-3** | **C-4** | **C-5** | **C-6** | **C-7** | **C-8** | **C-9** |
|---|---|---|---|---|---|---|---|---|---|
| **1,2-hexanediol** | 3.0 | 3.0 | 3.0 | 3.0 | 3.0 | 3.0 | 3.0 | 3.0 | 3.0 |
| **Glycerol** | 20.0 | 20.0 | 20.0 | 20.0 | 20.0 | 20.0 | 20.0 | 20.0 | 20.0 |
| **PEG200** | 19.0 | 19.0 | 19.0 | 19.0 | 19.0 | 19.0 | 19.0 | 19.0 | 19.0 |
| **Proxel** | 0.2 | 0.2 | 0.2 | 0.2 | 0.2 | 0.2 | 0.2 | 0.2 | 0.2 |
| **CAH-1** | | | 0.1 | 1.0 | | | | | |
| **CAH-2** | | | | | 0.1 | 1.0 | | | |
| **CAH-3** | | | | | | | 0.1 | 1.0 | |
| **CAP-1** | | | | | | | | | 0.1 |
| **water** | 21.6 | 21.6 | 21.5 | 20.6 | 21.5 | 20.6 | 21.5 | 20.6 | 21.5 |
| TEA | to reach a pH of 8.5 | | | | | | | | |
| PB7 | 3.0 | 3.0 | 3.0 | 3.0 | 3.0 | 3.0 | 3.0 | 3.0 | 3.0 |
| ID-2 | 0.8 | 0.8 | 0.8 | 0.8 | 0.8 | 0.8 | 0.8 | 0.8 | 0.8 |
| **water** | 16.2 | 16.2 | 16.2 | 16.2 | 16.2 | 16.2 | 16.2 | 16.2 | 16.2 |
| TEA | to reach a pH in range of 8.0 to 9.0 | | | | | | | | |
| **water** | rem. | rem. | rem. | rem. | rem. | rem. | rem. | rem. | rem. |
| Total = | 100.0 | 100.0 | 100.0 | 100.0 | 100.0 | 100.0 | 100.0 | 100.0 | 100.0 |
| pH | 8.7 | 8.4 | 8.6 | 8.5 | 8.7 | 8.8 | 8.6 | 8.8 | 8.5 |

**Table 13**

| **wt% of** | **I-1** | **I-2** | **I-3** | **I-4** | **I-5** | **I-6** |
|---|---|---|---|---|---|---|
| 1,2-hexanediol | 3.0 | 3.0 | 3.0 | 3.0 | 3.0 | 3.0 |
| Glycerol | 20.0 | 20.0 | 20.0 | 20.0 | 20.0 | 20.0 |
| PEG200 | 19.0 | 19.0 | 19.0 | 19.0 | 19.0 | 19.0 |
| Proxel | 0.2 | 0.2 | 0.2 | 0.2 | 0.2 | 0.2 |
| AH-1 | 0.1 | 0.5 | | | | |
| AH-2 | | | 0.1 | 1.0 | | |
| AH-3 | | | | | 0.1 | 0.5 |
| water | 21.5 | 21.1 | 21.5 | 20.6 | 21.5 | 21.1 |
| TEA | to reach a pH of 8.5 | | | | | |
| PB7 | 3.0 | 3.0 | 3.0 | 3.0 | 3.0 | 3.0 |
| ID-2 | 0.8 | 0.8 | 0.8 | 0.8 | 0.8 | 0.8 |
| water | 16.2 | 16.2 | 16.2 | 16.2 | 16.2 | 16.2 |
| TEA | to reach a pH in range of 8.0 to 9.0 | | | | | |
| water | rem. | rem. | rem. | rem. | rem. | rem. |
| Total = | 100.0 | 100.0 | 100.0 | 100.0 | 100.0 | 100.0 |
| pH | 8.7 | 8.7 | 8.7 | 8.5 | 8.7 | 8.7 |

**Table 14**

| | | | | | | |
|---|---|---|---|---|---|---|
| **wt% of** | **I-7** | **I-8** | **I-9** | **I-10** | **I-11** | I-12 |
| 1,2-hexanediol | 3.0 | 3.0 | 3.0 | 3.0 | 3.0 | 3.0 |
| Glycerol | 20.0 | 20.0 | 20.0 | 20.0 | 20.0 | 20.0 |
| PEG200 | 19.0 | 19.0 | 19.0 | 19.0 | 19.0 | 19.0 |
| Proxel | 0.2 | 0.2 | 0.2 | 0.2 | 0.2 | 0.2 |
| AH-2 | | | | | | 0.1 |
| AH-3 | 1.0 | | | | | |
| AH-4 | | 0.1 | 1.0 | | | |
| AP-1 | | | | 0.1 | 1.0 | 0.1 |
| water | 20.6 | 21.5 | 20.6 | 21.5 | 20.6 | 21.5 |
| TEA | to reach a pH of 8.5 | | | | | |
| PB7 | 3.0 | 3.0 | 3.0 | 3.0 | 3.0 | 3.0 |
| ID-2 | 0.8 | 0.8 | 0.8 | 0.8 | 0.8 | 0.8 |

| **wt% of** | **I-7** | **I-8** | **I-9** | **I-10** | **I-11** | I-12 |
|---|---|---|---|---|---|---|
| water | 16.2 | 16.2 | 16.2 | 16.2 | 16.2 | 16.2 |
| TEA | to reach a pH in range of 8.0 to 9.0 | | | | | |
| water | rem. | rem. | rem. | rem. | rem. | rem. |
| Total = | 100.0 | 100.0 | 100.0 | 100.0 | 100.0 | 100.0 |
| pH | 8.5 | 8.6 | 8.4 | 8.7 | 8.2 | 8.6 |

### Evaluation and Results

A corrosion test was performed for a duration of 14 days at 60°C. The results are shown in Table 15.

**Table 15**

| Inkjet **Ink** | pH | Compound | | Corrosion Test Score | |
|---|---|---|---|---|---|
| | | Type | Amount (wt%) | **Si<100>-wafer** | NWC Si-wafer |
| C-1 | 8.7 | | | D | D |
| C-2 | 8.4 | | | D | D |
| C-3 | 8.6 | CAH-1 | 0.1 | D | D |
| C-4 | 8.5 | CAH-1 | 1.0 | B | D |
| C-5 | 8.7 | CAH-2 | 0.1 | C | A |
| C-6 | 8.8 | CAH-2 | 1.0 | D | D |
| C-7 | 8.6 | CAH-3 | 0.1 | D | D |
| **C-8** | 8.8 | CAH-3 | 1.0 | D | D |
| C-9 | 8.5 | CAP-1 | 0.1 | B | D |
| **I-1** | 8.7 | AH-1 | 0.1 | B | A |
| **I-2** | 8.7 | AH-1 | 0.5 | B | A |
| **I-3** | 8.7 | AH-2 | 0.1 | A | A |
| **I-4** | 8.5 | AH-2 | 1.0 | A | A |
| **I-6** | 8.7 | AH-3 | 0.1 | B | A |
| **I-7** | 8.7 | AH-3 | 0.5 | B | A |
| **I-8** | 8.5 | AH-3 | 1.0 | A | A |
| **I-9** | 8.6 | AH-4 | 0.1 | B | A |
| **I-10** | 8.4 | AH-4 | 1.0 | B | A |
| **I-11** | 8.7 | AP-1 | 0.1 | B | A |
| I-12 | 8.2 | AP-1 | 1.0 | B | A |
| **I-13** | 8.6 | AP-1/AH-1 | 0.1/0.1 | B | A |

From Table 15, it should be immediately clear that only the inkjet inks I-1 to I-12 exhibit good results for corrosion on both the Si<100>-wafer substrate and the NWC Si-wafer substrate from FUJIFILM DIMATIX.

It was also observed that inkjet inks containing a hydroquinone type compound with a carboxylic acid or salt thereof (see AH-2 or AH-3) tend to be more efficient and effective against corrosion than hydroquinone type compounds without a solubilizing group (see AH-1) or a solubilizing group different than a carboxylic acid or salt thereof (see AH-4) or a phenidone type compound (see AP-1) or a combination thereof (see AP-1/AH-1).

### Reference signs list

The reference signs used in the drawings are listed in Table 16.

**Table 16**

| | |
|---|---|
| 1 | Nozzle plate |
| 2 | Nozzle |
| 3 | Corrosion of nozzle edge |
| 10 | Print head wall |
| 11 | Ink ejection |
| 12 | Ink inlet |
| 13 | Ink outlet |
| 14 | Ink channel |
| 15 | Nozzle plate |
| 16 | Nozzle |
| 17 | Ejected ink droplet |
| 18 | Inner nozzle diameter |
| 19 | Outer nozzle diameter |

## Claims

1. An industrial inkjet printing method comprising the steps of:
a) jetting an aqueous inkjet ink from a silicon-based MEMS piezoelectric inkjet print head on a substrate at a jetting temperature between 20°C and 40°C; and
b) drying the aqueous inkjet ink jetted on the substrate;
wherein the aqueous inkjet ink contains a carbon black pigment and a polymer attached to the carbon black pigment with a weight ratio P/CB of the polymer (P) to the carbon black pigment (CB) in the range of 0.50 to 0.90; and wherein the pH of the aqueous inkjet ink is between 7.5 and 9.5.

2. The industrial inkjet printing method according to claim 1, wherein the polymer is either a polymeric dispersant or otherwise a polymer forming the polymeric shell of a microcapsule encapsulating the carbon black pigment.

3. The industrial inkjet printing method according to claim 2, wherein the polymer is cross-linked.

4. The industrial inkjet printing method according to any one of claims 1 to 3, wherein the viscosity of the aqueous inkjet ink is between 3.0 and 6.5 mPa.s at a temperature of 32°C.

5. The inkjet printing method according to any one of claims 1 to 4, The inkjet printing method according to any one of claims 1 to 4, wherein the average particle size is between 80 and 150 nm as measured by dynamic light scattering.

6. The industrial inkjet printing method according to any one of claims 1 to 5, wherein the silicon-based MEMS piezoelectric inkjet print head is a through flow piezoelectric print head having a nozzle surface area NS smaller than 500 µm².

7. The industrial inkjet printing method according to any one of claims 1 to 6, wherein the aqueous inkjet ink contains the carbon black pigment in an amount of 1.8 to 5.0 wt% based on the total weight of the aqueous inkjet ink.

8. The industrial inkjet printing method according to any one of claims 1 to 7, wherein the aqueous inkjet ink further comprises an anti-corrosion compound selected from a compound including a six-membered aromatic ring having two hydroxyl groups in para-position and a compound according to Formula 2, 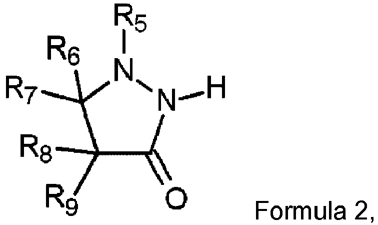 wherein R₅ is selected from the group consisting of an alkyl group, an alkenyl group, an alkynyl group, an aralkyl group, an alkaryl group and an aryl and a heteroaryl group; R₆ to Rg are independently selected from the group consisting of a hydrogen, an alkyl group, an alkenyl group, an alkynyl group, an aralkyl group, an alkaryl group and an aryl group and a heteroaryl group; or any of R₆ to Rg may represent the necessary atoms to form a five to eight membered ring.

9. The industrial inkjet printing method according to claim 8, wherein the compound including a six-membered aromatic ring having two hydroxyl groups in para-position is a compound according to Formula 1: 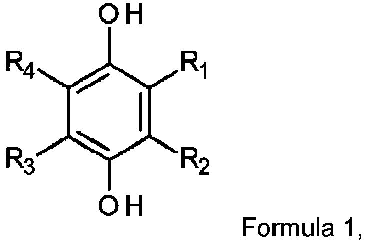 wherein R₁ to R₄ are independently selected from the group consisting of a hydrogen, an alkyl group, an alkenyl group, an alkynyl group, an aralkyl group, an alkaryl group, an aryl group, a heteroaryl group, a halogen, a hydroxyl group, an ether group, an ester group, a carbonate group, an amide group, a urethane group, a carboxylic acid group or salt thereof, a nitrile group, a nitro group, an amine group, a thiol group, a thioether group, a sulfonic acid group or salt thereof, a sulphonamide group, a sulfonate ester group, a sulfoxide group, a sulfone group, a phosphate or salt thereof, a phosphate ester, a phosphonate or salt thereof, a phosphonate ester group, an aldehyde group and a ketone group, or wherein R₁ and R₂ and/or R₃ and R₄ may represent the necessary atoms to form a five to eight membered ring.

10. The industrial inkjet printing method as claimed in claim 8 or 9, wherein the compound according to Formula 1 or 2 is present in an amount of 0.001 to less than 1.0 wt% based on the total weight of the aqueous inkjet ink.

11. The industrial inkjet printing method according to any one of claims 8 to 10, wherein R₁ to R₄ are independently selected from the group consisting of a hydrogen, a C1 to C4 alkyl group, a substituted or unsubstituted phenyl ring, a carboxylic acid group or salt thereof and a sulfonic acid group or salt thereof; and/or
wherein R₅ is a substituted or unsubstituted phenyl group with carboxylic acid groups or salts thereof and sulfonic acid groups or salts as substituents; and/or
wherein R₆ and R₇ represent a hydrogen; and/or
wherein R₈ and R₉ are independently selected from the group consisting of a hydrogen and an alkyl group.

12. The inkjet printing method according to claim 8, wherein the anti-corrosion compound is selected from the group consisting of: 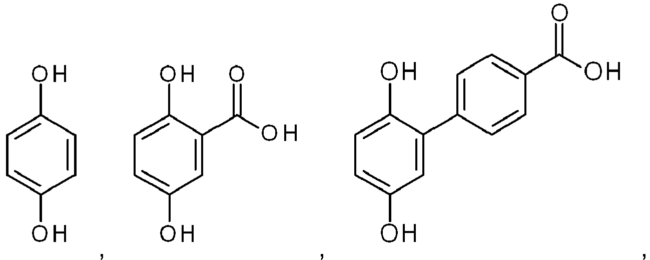 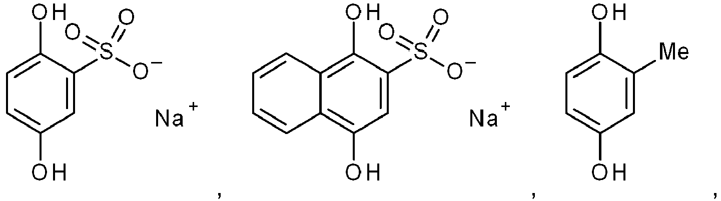 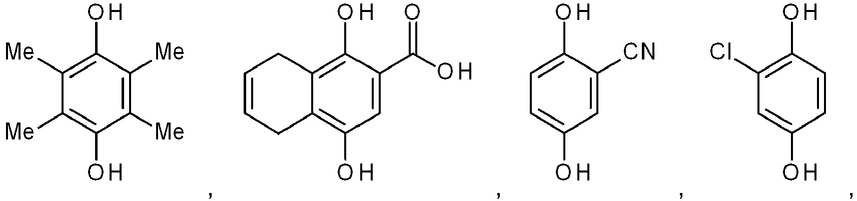 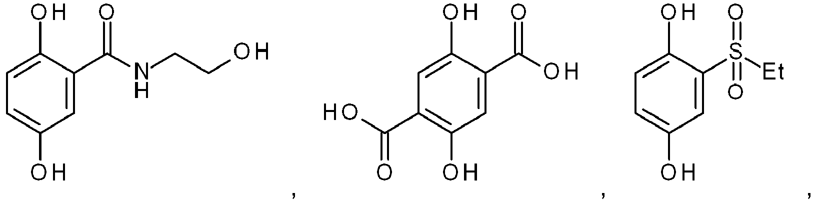 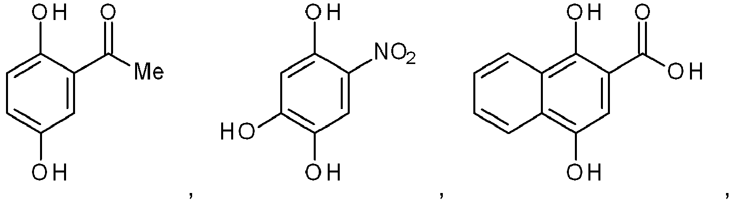 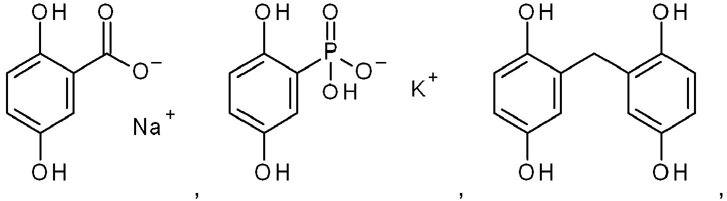 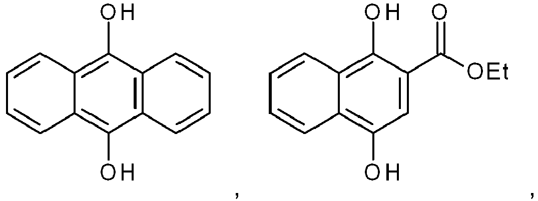 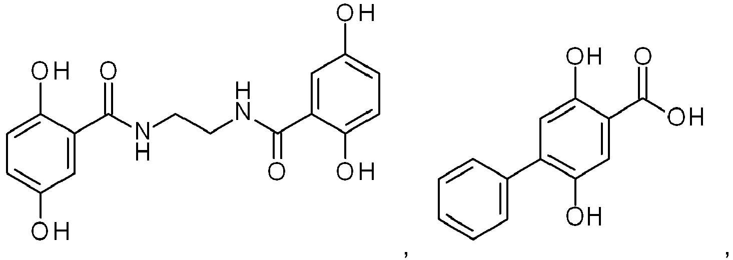 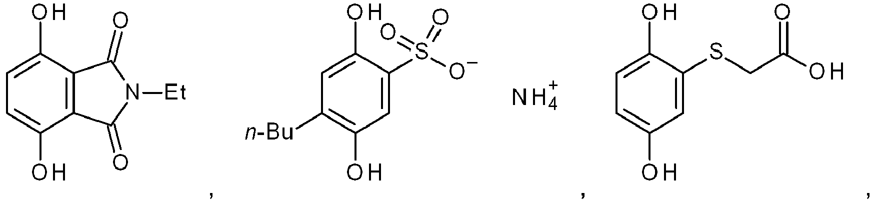 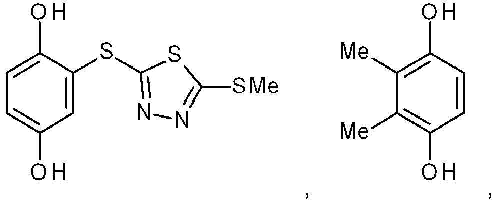 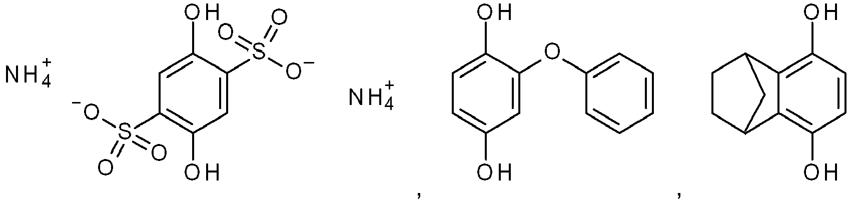 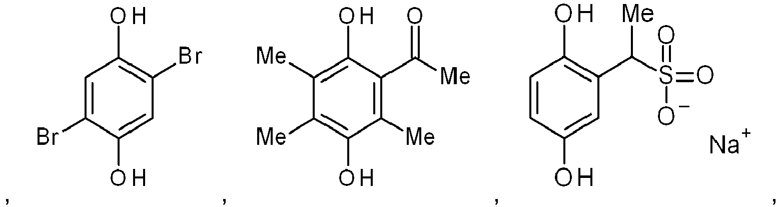 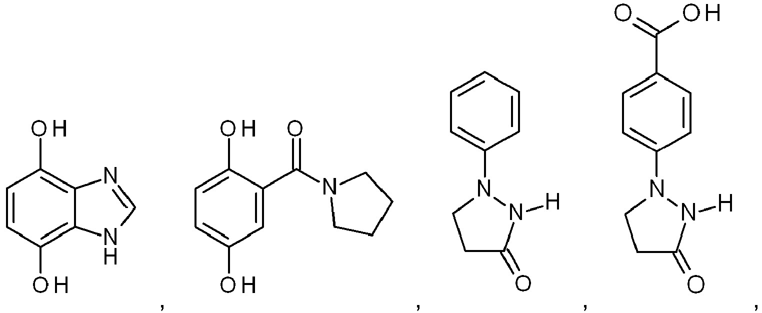 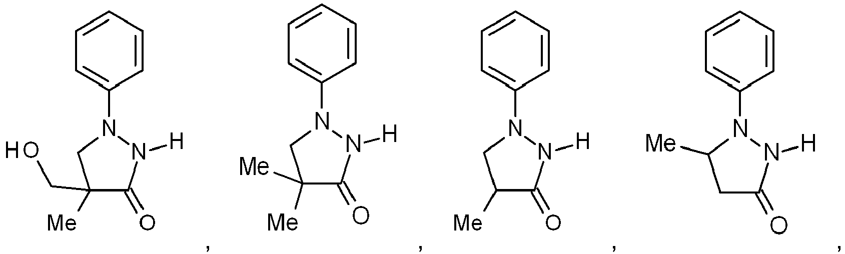 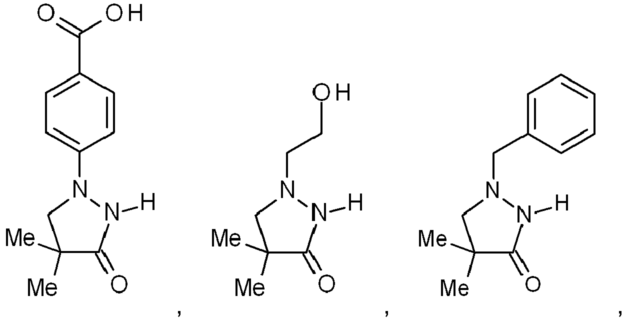 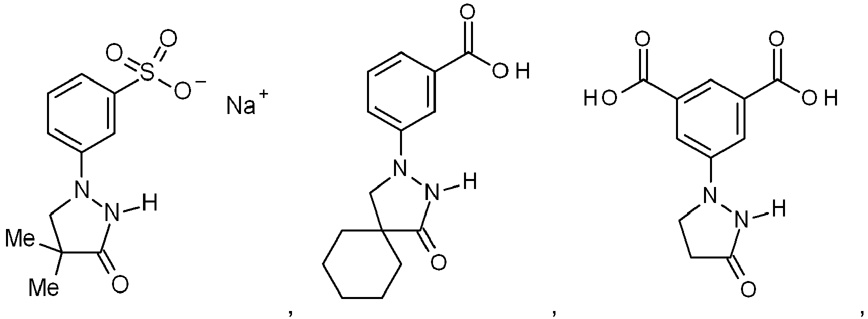 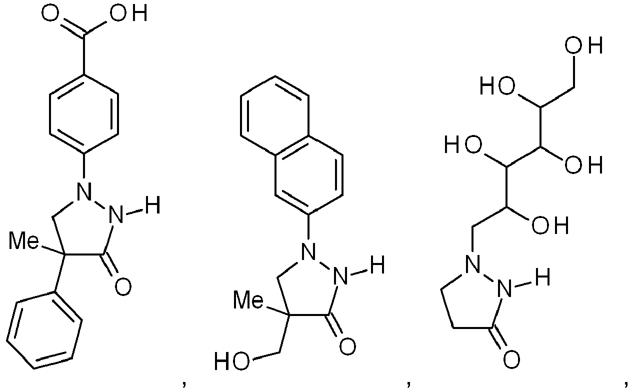 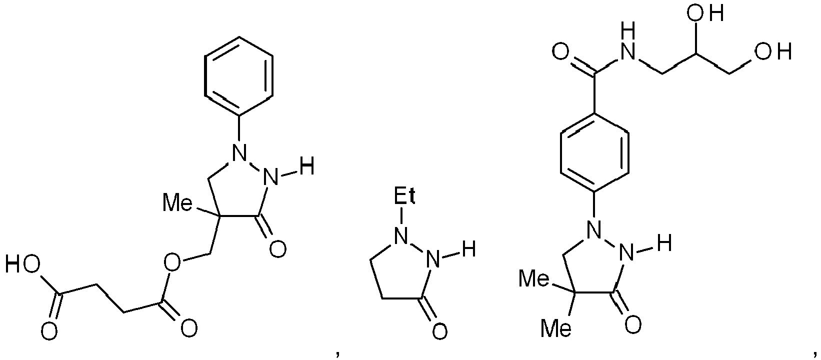 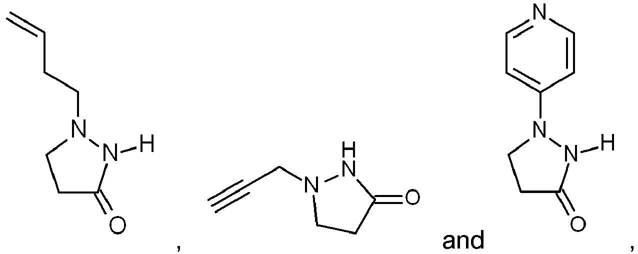 with the proviso that the above compounds disclosed with an acid group may also be a salt thereof; and with the proviso that the above compounds disclosed as a salt may include any cation selected from the group consisting of Li⁺, Na⁺, K⁺, NH₄⁺ and monovalent organic cations.

13. The industrial inkjet printing method according to any one of claims 1 to 7, wherein the pH of the aqueous inkjet ink is 8.0 to 9.0.

14. A method of manufacturing decorative laminates comprising the steps of:
a) printing a décor paper as substrate with the industrial inkjet printing method as claimed in any one of claims 1 to 13;
b) impregnating the printed décor paper with a thermosetting resin; and
c) heat pressing the thermosetting resin impregnated printed décor paper into a decorative laminate.

15. A manufacturing method of carton or corrugated cardboard packaging comprising the steps of:
a) providing the paper surface of a substrate with an ink receiving layer; and
b) inkjet printing an image onto the ink receiving layer with the industrial inkjet printing method as claimed in any one of claims 1 to 13.
